(19) Europäisches Patentamt
European Patent Office
Office européen des brevets

(11) EP 0 601 714 B1

# (12) EUROPEAN PATENT SPECIFICATION

(45) Date of publication and mention of the grant of the patent:
**29.03.2000 Bulletin 2000/13**

(51) Int. Cl.$^7$: **G01N 21/64**, G01N 15/14 // C12Q1/68

(21) Application number: **93308986.4**

(22) Date of filing: **10.11.1993**

## (54) Method and device for determining location and the number of a fluorescent molecule

Verfahren und Vorrichtung zur Ortung und zum Zählen von Fluoreszenz-Molekülen

Procédé et dispositif de localisation et de numération de molécules fluorescentes

(84) Designated Contracting States:
**DE FR GB**

(30) Priority: **10.11.1992 JP 30013492**

(43) Date of publication of application:
**15.06.1994 Bulletin 1994/24**

(73) Proprietor:
**HAMAMATSU PHOTONICS K.K.**
**Shizuoka-ken (JP)**

(72) Inventor:
**Ishikawa, Mitsuru,**
**c/o Hamamatsu Photonics K.K.**
**Shizuoka-ken (JP)**

(74) Representative:
**Burke, Steven David et al**
**R.G.C. Jenkins & Co.**
**26 Caxton Street**
**London SW1H 0RJ (GB)**

(56) References cited:
**EP-A- 0 440 342**
**EP-A- 0 469 444**
**EP-A- 0 541 296**
**WO-A-90/14589**
**WO-A-92/18608**
**US-A- 4 962 037**
**US-A- 5 062 942**

- **CHEMICAL PHYSICS LETTERS vol. 173, no. 1 , 28 September 1990 pages 129 - 131 B. BROCKLEHURST 'Luminescence of DNA excited in the vacuum ultraviolet'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Xerox (UK) Business Services
2.16.7/3.6

## Description

### BACKGROUND OF THE INVENTION

### Field of the Invention

This invention relates to a method of and a device for determining a location of a molecule-group and the number of a fluorescent molecule type in the molecule-group. The invention can be used in optically discriminating nucleic acid bases (e.g., nucleotide) constituting a gene to determine a sequence of the nucleic acid bases specifically to an art in which basically fluorescence or luminescence of fluorescent molecules represented by the base is measured to discriminate number, position, etc. of the fluorescent molecules.

### Related Background Art

A DNA molecule (deoxyribonucleic acid containing base as a main component, and sugar and phosphoric acid is bonded to the base), which is a composition material of a gene, has a double helical form. The double helix contains genetic information. Each DNA contains one genetic information in a code-like form (base sequence). Genes are gathered in strings in the cell nucleus. Lower organisms, such as microorganism, have thousands of nucleotide pairs at most, but higher organisms having more genetic information have several billions to 29 billions of base pairs.

Genetic information indicated by DNA, which is a main body of a gene, is determined by a sequence of four kinds of base, i.e., adenine, guanine, cytosine and thymine. Accordingly, it is very significant to know their sequences for the future development of genetic engineering, medicine, etc.

It is known that these bases emit their intrinsic fluorescence. Their fluorescence increases, especially at low temperatures (100 K or less). It is possible to discriminate the bases in principle based on their fluorescence lifetimes. To generate fluorescence, it is necessary to irradiate excitation light. A high sensitivity detector, such as a photomultiplier, is suitably used for the detection of the fluorescence. As an apparatus for detecting a single fluorescent molecule, the apparatus disclosed in, e.g., "Proc. Natl. Acad. Sci.", U.S.A., 86 (1989) 4087-91 (a first conventional method) is known. In this reference, as shown in Fig. 1, excitation light (laser beam) from a light source is applied to a flow cell 61 containing dye solution, and fluorescence is detected by a photomultiplier 63 in a direction which is normal to both directions of irradiation of the excitation light and of flow of the dye solution.

In Fig. 1, an optical system for forming an image on the photomultiplier 63 comprises a lens 64, an aperture 65, a wavelength selecting filter 66 and a condensation lens 67. A measuring system for measuring the fluorescence detected by the photomultiplier 63 comprises an electric signal detecting/multiplying unit 68, a fluorescent photon counter 69 and a computer 70.

There is a second conventional method in which respective single-fragment bases are modified by fixable fluorescent dyes (Japanese Patent Laid-Open Publication No. 100945/1991, United States patent No. 4,962,037). The second conventional method has the same arrangement in which the respective bases are labelled by their characteristic dyes, then cut off by exonuclease III, and a sequence of the bases is determined based on differences in the fluorescence spectrum.

A third conventional method also suitable for single fluorescent molecule detection relies on high resolution spectroscopy of single impurity aromatic molecules (pentacene) embedded in an organic molecule (paraterphenyl) (J. Chem. Phys. 95(10), 15 Nov. 1991, 7150-7163). This third conventional method is not suitable for detecting the base, but measures a fluorescence excitation spectrum of pentacene at ultra-low temperature (about 4 K) to measure a uniformly wide spectrum in an ununiformly wide spectrum and uses the former as a fluorescence spectrum of the single molecule.

On the other hand, advantages of the first conventional method produced by using a flow cell 61 are that degradation of dyes can be suppressed, and that a filter can be provided in a dye circulation system to remove dust. But fluorescence can be observed only in a period of time (about μsec) in which the molecule is passing through a region irradiated with the excitation light irradiated. Accordingly, in the device of Fig. 1, the fluorescence from the base of genes cannot be correctly and efficiently detected; only four kinds of base, A, G, C, and T, are contained in one DNA, and their numbers are very large, but on the other hand, their sizes are very small, and fluorescence generated from their base is very feeble. A detection of fluorescence during an instance in which the beam of the excitation light passes through the base is very difficult to discriminate kinds of the base.

A longer period of time being able to generate the fluorescence and higher efficiency can be obtained by irradiating the excitation light to a base flow over a larger area in the direction of the base flow. But in this case, the base which is fed one after another is simultaneously detected, with the result that processing of the obtained data is difficult.

SUMMARY OF THE INVENTION

According to one aspect of the invention, there is provided a method for determining a location of a molecule-group and the number of a fluorescent molecule type in the molecule-group, the method comprising: a first step of irradiating excitation light to a local area on a flat substrate with a molecule-group comprising fluorescent molecules adsorbed onto the local area of the substrate; a second step of measuring the number of fluorescence photons per unit period of time which photons are created by irradiating said excitation light to said local area on said substrate, as a quantized fluorescence intensity of said molecule-group; and a third step of determining a location of said molecule-group and the number of a fluorescent molecule type in said molecule-group, based on a measuring position in said local area and the number of said fluorescence photons from said molecule-group.

Here "quantized" means "to express as multiples of a definite quantity".

According to another aspect of the invention, there is provided a device for determining a location of a molecule-group and the number of a fluorescent molecule type in the molecule-group, the device comprising: a light source for irradiating excitation light to a local area on a flat substrate with a molecule-group comprising adsorbed fluorescent molecules adsorbed onto the local area of the substrate; and fluorescence measuring means for measuring the number of fluorescence photons per unit period of time, which photons are created by irradiating said excitation light to said local area on said substrate as a quantized fluorescence intensity of said molecule-group; and means for determining a location of said molecule-group and the number of a fluorescent molecule type in said molecule-group, based on a measuring position in said local area and the number of said fluorescence photons from said molecule-group.

The fluorescence measuring means may be disposed at a position which is out of optical paths of the excitation light from the light source, and of reflected light on the surface of the substrate.

The device may comprise an optical microscope (variable magnification) for condensing a fluorescence from a local area on the surface of the substrate, and means for counting fluorescence photons condensed by the optical microscope, and displaying an appearance frequency distribution of the fluorescence photons on a two-dimensional image corresponding to the local area.

The appearance of the frequency distribution of the fluorescence photons per unit period of time may be formed by plotting the frequency of the appearance of the fluorescence intensity in the fluorescent spots on a two-dimensional image of the sample substrate. The number of fluorescent molecules in the fluorescent spots may be identified based on the appearance frequency distribution of the fluorescence photons per unit period of time displayed on the two-dimensional image.

Furthermore, the device may comprise moving means for relatively moving the local area on the substrate. This moving means comprises an X-Y stage for moving the local area on the substrate. This moving means comprises an X-Y stage which horizontally moves with respect to the fluorescence detecting means, and a rotary stage supported by the X-Y stage for fixing the substrate.

Characteristics of the device in addition to those above-described are that the substrate is a disk-shaped silicon wafer. This produces the merit of downsizing the device, and others. Cooling means may be included for increasing fluorescence intensities in detecting fluorescence of the respective bases.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art form this detailed description.

BRIEF DESCRIPTION OF THE DRAWINGS

Fig. 1 is a diagrammatic view of a proposed device for determining a sequence of bases of a nucleic acid.

Fig. 2 is a diagrammatic view of the device for determining a location of a molecule-group and the number of a fluorescent molecule type in the molecule-group according to an embodiment of this invention.

Fig. 3 is a view of a fine liquid droplet 22 containing the molecule-group to be adsorbed on a silicon wafer as a flat substrate 20.

Fig. 4 is a diagrammatic view of moving means for moving the substrate as shown in Fig. 3.

Fig. 5 is a view of an absorption spectrum of a SA-FLB/B mixed solution.

Fig. 6 is a view explaining that the mixed solution of Fig. 5 does not follow Beer's law.

Fig. 7 is a view of an absorption spectrum of a SA-FLB solution.

Fig. 8 is a view explaining that the mixed solution as shown in Fig. 7 follows Beer's law.

Fig. 9 is a view explaining that the number of FLB/B bonding with SA is estimated by the comparison of the experimental data (●) with the standard sample (△).

Fig. 10 is a view of fluorescence spectra of respective solutions of (1) FLB alone, (2) SA-FLB/3B, (3) SA-FLB/2B, (4) SA-3FLB/B and (5) SA-4FLB.

Fig. 11 is a view of changes of relative fluorescence quantum yield of the respective solutions as shown in Fig. 10 depending on SA and the number of FLB.

Figs. 12 - 14 are views of distributions of an area on the surface of the substrate occupied by one of liquid droplets containing a fluorescent molecule when their atomizing time is 10 seconds (Fig. 12), 7 seconds (Fig. 13) and 3 seconds (Fig. 14).

Figs. 15 and 16 are views of fluorescence intensity distributions (relationships between the number of fluorescence photons per unit period of time and the appearance frequency of the photons) of SA-FLB/3B mixed solution. The intensity number is a relative quantity, not the number of photons.

Fig. 17 is a view of a fluorescence intensity distribution (relationship between the number of fluorescence photons per unit period of time and the appearance frequency of the photons) of a solution of DSFL alone. The intensity number is equal to the number of photons in this figure.

Fig. 18 is a view of theoretical values W(N) of a quantized fluorescence intensity distribution and the measured distribution of DFL (shaded) from Fig. 17.

Fig. 19 is a view explaining a relationship between the transition moment of DSFL and the polarization of the 488mm-laser beam.

Fig. 20 is a diagrammatical view of the device for determining a sequence of bases of nucleic acid according to this invention.

Fig. 21 is a view explaining the irradiation of a laser beam in the device of Fig. 19 (including the cooling means).

Figs. 22 - 24 are diagrammatic views of specific structures of the cooling means 34 as shown in Fig. 21.

Fig. 25 is a view of applying bases in their sequences on the disc-shaped substrate 20.

Fig. 26 is a view of the substrate 20 with adsorbed bases.

Fig. 27 is a detailed structural view of the flow cell 10 in Fig. 25.

Fig. 28 is a diagrammatic view of an example of the device for determining a sequence of bases of nucleic acid according to this invention.

Figs. 29 - 32 are pictorial views of the principle for luminescence detection for identifying different kinds of base (monoclonal antibodies applied to the substrate 20).

## DETAILED DESCRIPTION OF THE PREFERRED EMBODIMENTS

As described above in connection with the prior art, a measurement of locations of fluorescent molecules and the number of the fluorescent molecules has not been so far developed. The above field makes progress at present. A method for detecting locations of the fluorescent molecules and measuring the number of the fluorescent molecules is an important part of the present invention. Firstly, the measuring method conducted by an inventor of the present invention, and the device for the measuring method will be explained.

One characteristic of this invention is that for the confirmation of the presence of a molecule-group comprising the fluorescent molecule, excitation light is irradiated to count the number of generated fluorescent photons per unit time as quantized fluorescence intensity in proportion to the number of the fluorescent molecules, while a location (a fluorescent spot) of a molecule-group and the number of a fluorescent molecule type in the molecule-group present in a local area irradiated with the excitation light is determined based on an appearance frequency distribution of the quantized fluorescence intensity formed on a two-dimensional image corresponding to the local area.

Fig. 2 is a block diagram of an example of a device for a method for detecting a molecule-group comprising a fluorescent molecule according to an embodiment of the present invention. This device comprises an excitation light source 30 for irradiating the excitation light to the surface of a silicon wafer as a substrate 20 with the molecule-group to be measured adsorbed on thereof (this silicon wafer is covered with an insulating natural oxide layer), an optical microscope objective 42 for condensing a fluorescence generated from the fluorescent molecule in the molecule-group, and a photon counting system A (comprising a photon-counting camera 40, camera controller 44, computer 45, a monitor 46, and MO disk unit 47) as means for detecting at an excitation light irradiating position the fluorescence from the fluorescent molecule. The optical microscope objective 42 and the photon counting system A are connected by a microscope body 41. The substrate 20 is positioned in a clean booth of Class 1000 or less to be in a clean ambient atmosphere. This device can be used not only for a base of nucleic acid, but also for various substances including protein as long as the substance generates fluorescence. A molecule which does not generate the fluorescence can be used by being bonded with a predetermined number of substance emitting a fluorescence to be measured by this device.

It is preferable that the excitation light source 30 continuously irradiate intense light, e.g., coherent laser beam, to a part of the substrate 20 on where the molecule-groups comprising fluorescent molecules is adsorbed. Here, a 488 nm-wavelength argon laser beam (Spectra-physics 2030) is adjusted by a calibrated power meter (Spectra-physics 385) to be an average power of 7 - 20 mW. Then, the beam is condensed by a lens 32 with a 50 cm focal length to be applied. The excitation light source 30 is so arranged that excitation light enters slantly $\alpha$=70° as in Fig. 2, so that the reflected beam on the surface of the substrate 20 reflects slantly.

The flat substrate will be defined here. According to the results of the embodiments (e.g., Fig. 17) which will be explained later, an intensity ratio between a fluorescence intensity and a background light intensity is about 100 : 1 (larger this ratio, the better). In the following embodiments, an irradiation angle is about 20° to the horizontal plane, but the irradiation angle is not limited to the angle as long as the laser beam (excitation light) and the reflected beam are not directly irradiated to an objective (incorporated in the optical microscope 42) for condensing the fluorescence and can illuminate a set local area of the substrate 20.

Then, in the specification "flat" will be defined as follows. That is, the "flat" means a state in which the fluorescence can be measured at an intensity ratio of above 10 : 1 between the fluorescence and a background light when the laser beam is incident on the surface of the substrate 20 at an irradiation angle which meets the above-described conditions.

A background light intensity is evaluated in a photon count value (the number of fluorescent photons per unit time) in an area on a two-dimensional image where a fluorescence spot (which are a pixel group corresponding to a position on the substrate 20 where the fluorescence is detected and indicates the location of the molecule-group to be measured) is absent, and which has the same area of the fluorescence spot.

An intensity ratio between the fluorescence and the background light is limited to 10 : 1 or more to limit the average number of fluorescent molecules (called a molecule-group) contained in one liquid droplet to below 4 so as to facilitate the discrimination of an individual number. That is, since a probability of one liquid droplet containing ten fluorescent molecules in a Poisson distribution of the average number of 4 is can not be ignored, even in such case the fluorescence and the background can be discriminated from each other by setting the intensity ratio between the fluorescence and the background light at 10 : 1 or more.

The photon counting system A is a system for detecting the location of the molecule-group adsorbed on the substrate 20, and the number of the fluorescent molecules at the location, and has to be capable of detecting a feeble light. In this embodiment, the system A is an imaging/image analyzing system (ARGUS 50 VIM 3, by Hamamatsu Photonics K. K.) with the optical microscope 42 mounted on through the microscope shaft 41, and can two-dimensionally detect the feeble light by two-dimensionally counting the fluorescent photons. The optical microscope 42 for condensing fluorescence from the fluorescent molecules, in this embodiment, includes an objective (OPTIPHOT XP, by NIKON) with a magnification of 40 (0.55 NA) or 100 (0.75 NA). The 100 x objective; NIKON CF M plan SLWD, NA = 0.75 and working distance (WD) = 4.3 mm. The 100 x objective was used in the experiment using disodium fluorescein (DSFL). The x 40 objective was used for the droplet size determination shown in Figs. 12-14, and used in the experiment using streptoavidine-dye complex.

The operation principle of the photon counting system A is described by T. Hayakawa : Image Analysis in Biology, ed. D. - P. Hader, (CRC Press, Boca Raton, 1992), Chap. 5, pp. 75 -86.

The photon-counting camera 40 has 512 x 512 pixels and high sensitivity (VIM 3), and one pixel has a 0.3 µm-width with the 40-magnification objective and 0.12µm-width with the 100 x objective. The fluorescence from the fluorescent molecules is converted into a image signal by the photon counting camera 40, and the signal is stored (counting the fluorescent photons), image-processed, recorded and image-displayed by a camera controller 44, a personal computer 45, a MO disk unit 47 and a monitor 46.

The substrate 20 is controlled by a drive device (moving means) as shown in Fig. 4 in terms of its position and rotation so that a relative position of a local area of the surface of the substrate can be controlled to be in a field of the optical microscope 20 and the photon counting camera 40.

In Fig. 4, the drive device horizontally moves an X-Y stage 100 by a first and a second pulse motor 101, 102 in x-direction and y-direction in Fig. 4. A rotary stage 103 fixing the substrate 20 is mounted on the X-Y stage 100. The local area of the substrate 20 can be moved in the x-, the y- and $\theta$-directions. These parameters x, y, $\theta$ can be controlled independently of one another by a computer 104, whereby a position where a liquid droplet containing a molecule-group adsorbed on the substrate 20 can be spirally displaced (according to the embodiments which will be explained later).

The above first and the second pulse motors 101, 102 are provided by marketed ones that can control displacements in the x- and y-directions by a minimum unit of 1 µm (MSS-150/200, Microscanning stage, 1993, vol. 1, CHUO PRECISION INDUSTRIAL CO., LTD - CATALOG).

It is possible that wavelength selecting optical components are provided for shutting light other than the fluorescence intrinsic to an object to be measured in the microscope body 41 between the light detecting surface of the photon-counting camera 40 and the optical microscope 42 so as to prohibit incidence of scattered light of the excitation light. Similarly with Fig. 1, the wavelength selecting means comprises a wavelength selecting filter (for example the color filter BA 520 -560, by NIXON), and a dichroic mirror (for example DM 510, by NIXON). The choice of a mirror and a filter depends on the color of fluorescence. In this embodiment, BA520-560 and DM-510 are used because the fluorescence spectrum of DSFL has the 520 nm-maximum. The laser beam outside of the microscope can prohibit the incidence of the laser beam to be the background light and scattered light on the surface of the substrate 20. Approximately 60% of the fluorescence photons from DSFL pass through the combination of the filter and the mirror.

Then, the method for determining the location of the molecule-group and the number of the fluorescent molecules in the molecule-group by this device will be explained in the sequence of the steps thereof.

The fluorescent molecules to be measured are dissolved and diluted in a predetermined solvent. This solution is adsorbed on the surface of the substrate 20 in an atomized condition (fine liquid droplets) (Fig. 3). Then the substrate 20 is dried in a clean atmosphere to prepare the substrate 20 with the adsorbed molecule-groups. The solvent has high purity. One or more than one liquid droplet is in the view area of the microscope substantially corresponding to a resolution of the microscope objective 42 (an average number of fluorescent molecules in one liquid droplet is 4 or less and one molecule-group comprises these fluorescent molecule) (this will be explained later). Drying of the solvent decreases Raman scattering of the solvent being one reason causing the background light, and chemical reactions between the solvent and the fluorescent molecules, which is a cause of degradation of a fluorescent material, is greatly hindered. It is very possible that drying by heating or vacuum drying removes the specimen molecules. In case that a silicon wafer is used as the substrate 20, the fluorescent molecules are fixed by adsorption, and the fluorescent molecules cannot be easily dissociated. Accordingly, the substrate 20 can be repeatedly used. The silicon wafer as the substrate 20 is used as supplied, thereof surface being covered with insulating native oxide ($SiO_2$). Furthermore, the reflectivity of the substrate 20 (40%) can be measured with a Xe lamp coupled with a green interference filter (520nm) and a power meter can be equipped with an integration sphere (UDT S370).

An average number of the fluorescent molecules contained in the liquid droplet 22 is determined by a concentration of the solution containing the fluorescent molecules and the droplet size. Accordingly, when the size of the liquid droplet 22 is assumed constant, the average number of the fluorescent molecules in one liquid droplet 22 can be controlled by changing the concentration of the solution. Actually, the size of the liquid droplet 22 can be arbitrarily set unless the liquid droplet 22 is so large as to be outside a visual field of the detecting means.

In the embodiments which will be explained later (for example, Figs. 12 - 14), the liquid droplet 22 does not have a constant size, and has distributions (Figs. 12 - 14 are results of the inventor's evaluation of the distributions). The distributions show that the liquid droplets 22 of volumes of 10 $\mu m^3$ or less occupy 90% or more. Since this embodiment can prepare the liquid droplets 22 of a 10 $\mu m^3$ or less volume, it is easy to calculate a solution concentration which allows one liquid droplet to have 4 or less as to the average number of the fluorescent molecules. In computation, one liquid droplet can have an average number, 4 by setting the concentration of the solution containing the fluorescent molecules at 0.68 nano mol/liter or less.

A reason for limiting an average number of the fluorescent molecule in the one liquid droplet to 4 is to facilitate the discrimination of the individuals of the fluorescent molecules. That is, when the one liquid droplet having a set volume has 5 or more as to the average number of the fluorescent molecules, it is very difficult to discriminate a Poisson distribution contour, i.e., a contour of a graph plotting probabilities of the number of the fluorescent molecules appearing with respect to the number of the fluorescent molecules. For example, it is easier to discriminate the Poisson distribution contour with one average molecule from that with two average molecules than the Poisson distribution contour with 5 average molecules from that with 6 average molecules.

Then, the substrate 20 is set in the device of Fig. 2, and while the laser beam is being irradiated, an area on the substrate 20 emitting light is measured. Since the laser beam is incident and reflected slantly, the scattered light of the beam does not enter the field of the optical microscope 42, and the background light has a very small intensity. In particular, if the substrate 20 is a silicon wafer, the scattered light has a small intensity because of a high speculum degree of the surface thereof. Furthermore, since no solvent molecules are on the surface of the substrate 20, there is little contribution from Raman scattering, and the background light has an small area which allows fluorescence from one molecule to be detected. The photon counting system A can measure a fluorescence intensity (the number of the fluorescence photons per unit time) and fluorescent spots where fluorescence of the intensity appears (an area where the fluorescent spots are present) on each screen corresponding to each local area, whereby it can be detected how many and where fluorescent molecules are present.

In the embodiments which will be explained later (e.g., Fig. 2), an irradiation angle of the laser beam to the substrate 20 is set at $\alpha=70°$, and an intensity ratio between the fluorescence and the background light is better than 100 : 1.

This detection of fluorescent molecules will be detailed based on actual measured results.

Position dependence on the light detecting efficiency sometimes occurs because of uneven irradiation of laser beams ($TEM_{00}$mode) to the substrate 20, and this is measured beforehand. A sheet of opaque glass is placed at a position where the substrate 20 is to be set to observe scattering of the laser beam of 488 nm wavelength. Significant parts of 512 x 512 pixels are marked. A brightness difference of the effective parts is about ±5% at most when the 100 x, NA=0.75 objective is used. In this embodiment, the laser-beam diameter on the surface of the substrate 20 is estimated to be 300 μm ($1/e^2$), and the field of the vision in the photon counting system A is approximately a 60 μm in diameter when the 100 x, NA=0.75 objective is used.

Here, the fluorescent molecules to be measured are provided by complexes of protein and fluorescent substance. The fluorescent substance is fluorescein biotin (FLB), and disodium fluorescein (DSFL). FLB and DFL have, in an aqueous solution, a 489 nm absorption peak ($\varepsilon$=90,000 $cm^{-1}M^{-1}$ at pH=8.4) and a fluorescence maximum at 520 nm (fluorescence quantum yield of $\Phi_f$ = 0.95 at pH=8.4) which were measured values given by Hitachi 557 and Hitachi 850). The protein is provided by tetrameres of streptavidin (SA) (the molecular weight 4 x 15,000). This SA has high affinity (dissociation constant $k_d=10^{-15}M^{-1}$) with FLB. A part (B) of FLB specifically reacts with SA, and 4 FLB/B molecules can be bonded (avidin-biotin complexes are produced). This reaction can be used to control the number of the fluorescent substance which bonds with SA. By controlling a mixed ratio (mole ratio) of FLB/B, the number of the FLB molecules which bond with SA can be made 1 - 4.

At first, the solution containing the above-described fluorescent substance to be measured is atomized to be adsorbed in the liquid droplet 22 to the substrate 20 (Fig. 3), and the substrate 20 is dried. The substrate 20 is thus prepared. In this embodiment, a ultlasonic humidifier (Sharp HV-A 200) was used to atomize the sample solution into fine liquid droplets 22, and the drying was conducted in a clean ambient atmosphere. The drying of the solvent reduces the Raman scattering of the solvent which is one cause of the background light, in comparison with that of the solution, with a result that the reaction of the solvent with the fluorescent molecules, which is a cause of degradation of the fluorescent substance, can be drastically prohibited. It is very possible that the heating and vacuum-drying will remove the fluorescent molecules (the molecule-groups) to be measured.

As seen in the embodiments which will be explained later (e.g., Fig. 17), a distribution of sizes (volume) of the liquid droplets 22 has 10 $\mu m^3$ or less by 90% or more, and at the maximum number of occurrence in the size distribution the volume is in a range of 3 - 4 $\mu m^3$. In this embodiment, as described above, the fine liquid droplets 22 are produced by means of the ultrasonic humidifier, but other liquid droplet generators are described in, e.g., Kin C. N, "Digital Chemical Analysis of Dilute Microdroplets", Anal. Chem., 1992, 64, 2914-2919.

In this embodiment (Fig. 3), a volume for each of the liquid droplet 22 is calculated on the conditions that the liquid droplet 22 is hemispherical and has a 90° contact angle. It is assumed that a fluorescent area (a fluorescent spot) after drying is in an equatorial plane of a hemispherical liquid droplet.

The above-described solution is diluted with super-pure water (Mili-Q water, Milipore). The solution can have a nano-mol /liter concentration, and as will be explained later, the average number of the fluorescent molecules in the one liquid droplet containing one molecule-group can be calculated. Some specimen aqueous solutions were repeatedly atomized onto silicon wafers (the substrate 20) and dried, and measured at 296 K. The aqueous solutions atomized onto the silicon wafers were prepared as follows.

SA was solved in a mixed aqueous solution (pH 7.5) of 10 mM of phosphate and 0.15 M of NaCl (2 mg/ml), and FLB and B were solved in the same buffer solution (phosphate and NaCl). Four kinds of mol ratios of FLB to B, 4:0, 3:1, 2:2, and 1:3, were prepared. A molar ratio which enabled FLB and SA to sufficiently react with each other was 20:1. The four kinds of FLB/B solutions were mixed in 100 μl of SA solution. Then, the above-described buffer solution was added to prepare a 200 μl solution.

After the thus-prepared solution was let to stand at 277 K for 4 hours, the SA-FLB/B mixed solution was passed through a gel filtering column (Superose 12, Pharmacia, bead size: 10 - 11 μm, column size: 1.2 x 30 cm, number: 12) to be separated into sufficiently reacted SA, and unreacted or insufficiently reacted SA. a solution of 10 mM of ammonium carbonate or phosphate (containing no NaCl) was used as a developer liquid (mobile phase). The measurement was conducted on the prepared specimen (the substrate 20 with the above-described fluorescent substance applied to) in next two days since the lifetime of the SA/B complex is about 2.9 days.

The DFL (Exinton) is used to estimate a size of liquid droplets to be atomized. A 2.3 x $10^{-5}$ M-DFL solution is atomized onto the silicon wafer (the substrate 20), and the substrate was mounted on the device of Fig. 2. While the laser beam was being irradiated, a size of an area ($pixel^2$) where fluorescence was generated was measured by the photon counting system A. It should be noted that the sensitivity of the detector was lower than that used in the photon counting system A, the light source was a halogen lamp, and one pixel was 0.3 μm in the droplet size measurements. On the assumption that a contact angle of the liquid droplet was 90°, the size of the area is converted into a volume of the semispherical liquid droplet 22a (Fig. 3).

These fluorescent molecules, FLB+SA and DSFL were used in consideration of biological and photophysical applications. The measurement of the first substances to be measured (SA, FLB, B) are for applications to immunoassay and DNA sequence. The measurement of the second substance to be measured (DFL) is for applications to photophysical studies.

The technique of forming a SA-FLB complex is based on a stoichiometric complicated composition of SA and FLB/B. The number of SA molecules bonded at four sites is measured by computing a ratio of light absorptions (A(489), A(280)) with respect to 489 nm wavelength and 280 nm-wavelength. Light absorption at 489 nm is only by FLB, and light absorption at 280 nm is only by FLB and B. FLB (d-biotin) does not absorb light in a 200 - 900 nm range. But Beer's law is not satisfied in a state where both SA and FLB are present (3 - 12 μM in 10 mM triethanolamine/HCl, pH=8.42).

Fig. 5 shows an absorption spectrum of FLB/B mixed with SA. The spectrum is for a compounds of FLB/B and SA having a ratio of 4 : 1. The spectrum was measured without column chromatography. In addition to the fact that the spectrum does not agree with Beer's law, as shown in Fig. 6, the half-value width of 489 nm increases with the increase of the FLB.

In Fig. 5, the measurement was conducted on a mixture of FLB/B and SA solved in a 10 mM triethanol amine/HCl at 296 K. A mol ratio between the FLB/B and the SA is 4 : 1. In this range, d-biotin does not absorb light. The light absorption near 280 nm is mainly due to tryptophan in the SA. In Fig. 6, black plots mean that A (280) does not linearly increase with increase in a concentration of the FLB. White plots mean that a half-value width at a 489 nm peak widens with increase of FLB concentration.

Figs. 7 and 8 show that a complex with only FLB follow Beer's law, and no expansion of a half-width value takes place in a same concentration range as in Figs. 5 and 6. The number of the FLB bonded with SA can be determined by referring to a ratio between A(489) and A(280) in which the FLB has small contribution. The FLB/B bonding causes a red shift (shift to a shorter wavelength) of tryptophan near 289 nm. Based on the above, on the assumption that the FLB/B and the SA in a mixed solution are completely bonded with each other, a ratio between A(489) and A(280) is given in Fig. 9, and, based on the ratio, the number of the FLB can be estimated.

To stoichiometrically react SA with FLB/B, a reaction time is important. Cause for this is not known. The reaction solution was let to stand overnight or more, and the number of the FLB/B bonded to the SA decreased. A ratio between A(493) and A(280) depends on the fraction number of chromatography. Black marks in Fig. 9 indicate fractions with maximum ratios between A(493) and A(280), and these fractions were used. Ratios of 4FLB, 3FLB/B, 2FLB/2B and FLB/3B considerably well agree with a ratio, as a standard value, in the case that FLB/B and SA are mixed exactly in a mol ratio of 4 : 1. But a ratio of 3FLB/B apparently disagrees with the ratio as the standard value, and different ratios were obtained every time the above-described solution was prepared. A possible reason for this is that the FLB/B separates from the SA in chromatography.

Fig. 9 shows that the number of FLB/B bonded with SA can be calculated based on an absorption A(489) at 489 nm, and an absorption A(280) at 280 nm. Only FLB contributes to A(489), and A(280) includes contribution of SA and FLB. Estimation of A(489)/A(280) was conducted at various ratios between the SA and the FLB/B. Black plots indicate that FLB/B-SA mixture from chromatography was used, and white triangular plots indicate that mixing ratios of the SA and the FLB/B was exactly 1 : 4. The latter was used as a standard value for determining the number of the FLB bonded with the SA.

It is known that fluorescent molecules at high concentration in water do not agree especially with Beer's law. According to some past studies as to an organic dye, it is found that the absorption spectrum varies much depending on the concentration. Foster and Konig report that it is found based on changes of absorption spectra of some organic dye molecules (fluorescent molecules) containing a fluorescent substance in water that the organic dye molecules form dimers at high concentration ($10^{-3}$ - $10^{-1}$M). Koizumi and Mataga report changes in absorption spectrum in an aqueous solution containing fluorescent molecules in the presence of electrolytic polymers. Based on these studies, it is considered that changes of the spectra are caused by cohesion effect of the fluorescent molecules to the polymers. Considering these past studies, and the bonding between SA and B due to their high affinity, it is considered that similarly sufficient local adhesion effect of FLB to SA can be present. This is also an optical evidence of interaction between SA and FLB. For example, bovine serum albumin, which has no affinity with FLB, causes no changes to FLB spectrum.

Then, a relative fluorescence quantum generation ratio of FLB bonded with SA, and a fluorescence spectrum were measured. Taking into consideration abnormal behaviors of the absorption spectra, it is considered that something takes place in the fluorescence characteristic of FLB upon bonding with SA. Fig. 10 shows fluorescence spectra of (1) FLB alone, (2) FLB/3B bonded with SA, (3) 2FLB/2B bonded with SA, (4) 3FLB/B bonded with SA, and (5) 4FLB bonded with SA (the bonding with SA was caused by solving with a 10 mM triethanol amine/HCl at pH8.42 and 296 K). The contours of the spectra are the same, and the peaks are not shifted. But when the FLB first bonded with the SA, the intensity extremely dropped and considerably decreased as the FLB went on bonding. Fig. 11 shows results of calculation of relative fluorescence quantum generation ratios of (1) to (5) attributed to SA. Fluorescence due to quenching of the SA shows that there are extinction reactions between the amino acid of SA and FLB. The mechanism of fluorescence due to the quenching depending on the number of FLB is considered the same as the self-quenching (which was reported in the above-described past study) by aqueous solutions containing fluorescent molecules.

Considering the above-described invention, a selection of suitable fluorescent molecules was conducted based on the results of Figs. 10 and 11. Since a fluorescence quantum generating ratio and a fluorescence coefficient decrease with the number of the FLB, only SA-FLB/B (monomer) can be measured for confirming a detection of the number of the molecules. In view of this, monomers are used in detecting the number of the fluorescent molecules.

According to this invention, it is necessary that one liquid droplet contains a small number of fluorescent molecules as a molecule-group. Since the number of the fluorescent molecules follows a Poisson distribution in the liquid droplet, the number of the fluorescent molecules in the liquid droplet can be calculated with the Poisson distribution. The inventors prepared a highly purified solution containing DFL, caused the DFL to adsorb on a silicon wafer in fine liquid droplets by a ultrasonic humidifier to measure the droplet size (volume), and the number of the fluorescent molecules in the one liquid droplet. The respective holizontal axis in Figs. 12 to 14 show distributions on areas on the silicon wafer 20 occupied by one liquid droplet for a 10-second, 7-second and 3-second periods of atomizing time. Frequencies (the number of liquid droplets) for sizes of areas (in pixel$^2$ unit, 1 pixel=0.3 μm) are shown. Positions of the peaks are a little shifted as the atomizing period of time is longer, but actually contours of the distributions, and the positions of the peaks are independent of the atomizing periods of time. Since a maximum peak is about 30 - 40 pixel$^2$ (3 - 4 μm$^3$), the number of fluorescent molecules in one liquid droplet is 1.00 - 1.56 for 1.0 nm/l concentration of the solution.

Liquid droplets each with a very small number of molecules as a molecule-group thus contained are caused to stick to the substrate 20 (silicon wafer), and then 100 or more light emitting areas on the substrate 20 were measured by the device of Fig. 2. Their fluorescence intensities, and frequencies of fluorescence spots of the intensities appearing were plotted.

Actually, the number of fluorescence photons per unit period of time, which were generated from a local area on the substrate 20 with excitation light irradiated was used as a quantized fluorescence intensity. A distribution of a frequency of appearance of the fluorescence photons is formed on a part of a two-dimensional image corresponding to the local area on the substrate 20. An area with a higher frequency of appearance of the fluorescence photons in the distribution of frequencies of appearance of the fluorescence photons is a fluorescence spot corresponding to the molecule-group in the local area. Based on a location of the spot, a location of the molecule-group (four molecules or less) can be identified.

Since the fluorescence intensity has a specific value corresponding to the number of fluorescent molecules, the number of fluorescence photons is counted by the above-described photon counting system A to measure, based on the counted value, the number of fluorescent molecules in one fluorescent spot (2-D photon counting method). The 2-D photon couting method is described by T. Hayakawa : Image Analysis in Biology, ed. D. - P. Hader, (CRC Press, Boca Raton, 1992) Chap. 5, pp. 75 - 86.

Accordingly the above-described fluorescence intensity is a absolute value based on the 2-D photon counting method. In Fig. 17 which will be explained later, the horizontal axis is "the number of photons". In Figs. 15 and 16, however, the horizontal axis is relative photon number. The results of Figs. 15 to 17 have a 60-second data accumulating period of time. An excitation light intensity is 7 mW in Figs. 15 and 16 and 20 mW in Fig. 17. A polarization direction of the laser beams in Figs. 15 to 17 is parallel with the sheets of the drawings as shown in Fig. 19.

Figs. 15 and 16 show the results of the measurement using FLB/3B bonded with SA on the entire surface of the substrate 20. (The optical microscope 42 was 40x, 0.55 NA.) Some peaks appear at every 500, which means that an fluorescence intensity is quantized, and this measurement detects the number of fluorescence spots having from 1 to 4 sample molecules. Intensity smaller than 500 on the horizontal axis might be attributed to scattered light of 488 nm wavelength due to dust particules on the silicon wafer. A minimum peak value clearly appears at 500 on the horizontal axis in Fig. 16. This peak is considered to be attributable to the single SA bonded with the FLB/3B. Fig. 15 and Fig. 16 have different buffer liquids from each other in column chromatography. In Fig. 15, phosphate (pH=7.5) was used alone, and in Fig. 16, ammonium carbonate was added (pH=7.5). These differences are considered to result from that optical noises due to bases of the buffer liquid detected on the surface of the substrate 20 because of volatility of the ammonium carbonate are suppressed.

Fig. 17 shows the result of the measurement using DFL alone. (In this case, the optical microscope 42 was 100 x, 0.75 NA). In this case as well, some peaks appear at every 1,000, and fluorescence intensities are quantized. The experiment in which water alone was atomized onto the silicon wafer 20 shows that the fluorescence intensities at 800 or less might be due to dust in the water. It can be affirmed that the fluorescence intensity at 1,000 is of the single molecule of the DFL.

The frequency of the quantized fluorescence intensities can be calculated based on distributions of sizes of liquid droplets of Figs. 12 to 14 and the concentration of the sample solution, and can be compared with the experimental results in Fig. 17. The number of fluorescent molecules in one liquid droplet follows a Poisson distribution (Formula 1).

$$W(N) = \mu^N e^{-\mu}/N! \qquad (1)$$

In Formula 1, W(N) represents the probability that N molecules are contained in one liquid droplet, and μ indicates the average number of molecules in one liquid droplet. Since some distribution occurs in a size of liquid droplets upon atomization, the actual number of them is expressed by the following Poisson's equation with a weight of the distribution of liquid droplet sizes.

$$W(N) = \sum_{\mu} f(\mu)\mu^{N} e^{-\mu}/N! \quad (2)$$

$$\sum_{\mu} f(\mu) = 1 \quad (3)$$

In Formulas 1 and 2, f(μ) represents a rated weight coefficient and is calculated based on the respective size distributions of liquid droplets of Figs. 12 to 14. Fig. 18 shows the calculation results of the W(N) together with the measured results (shaded) of DFL (both data are normalized at frequency of N=1). These results show good agreement, which means that the number of fluorescent molecules in each fluorescent spot can be detected.

Next, the data of Fig. 17 obtained by using the suitable fluorescent molecules DSFL for theoretical studies will be quantitatively compared with the number of observable fluorescence photon by using parameters of excitation light intensities, fluorescent molecule light absorption and emission, fluorescence measuring detectors or optical components, and others.

The above-described "Proc. Natl. Acad. Sci. USA 86 (1989) 4087-91" contains a relevant description in connection with this evaluation method.

An excitation light (wavelength: 488 nm, output: 20 mW) is irradiated to the surface of a silicon wafer 20 in a 300 μm diameter (it is defined that the laser beams have a Gaussian space intensity distribution and a diameter which yields a $1/e^2$ intensity). An excitation light intensity ($I_{ex}$) is given by

$$I_{ex} = 2.37 \times 10^{19} \text{(photons/sec/cm}^2\text{)}$$

A fluorescence photon number ($I_{abs}$) emitted by one fluorescent molecule per second is given as follows when a molecular light absorption coefficient is represented by ε.

$$\begin{aligned} I_{abs} &= 3.8 \times 10^{-21} \bullet \varepsilon \bullet I_{ex} \\ &= 3.8 \times 10^{-21} \times 9 \times 10^{4} \times 2.37 \times 10^{19} \\ &= 8.105 \times 10^{3} \text{(photons/sec/molecule)} \end{aligned}$$

where a molecular light absorption coefficient ε at a disodium fluorescein (DSFL) excitation light wavelength (488 nm) was $9 \times 10^4$/cm/M.

A fluorescence intensity ($I_f$) is given by multiplying this value $I_{abs}$ by the fluorescence quantum yield. That is, since the fluorescence quantum yield of disodium fluorescein is 0.95, the fluorescence intensity $I_f$ is given as follows.

$$I_f = I_{abs} \times 0.95 = 7.69 \times 10^{3} \text{(photons/sec/molecule)}$$

Furthermore, when a data accumulating time is 60 seconds, the total number of the fluorescence photons ($I_{tot}$) generated from one fluorescent molecule is given as follows.

$$I_{tot} = I_f \times 60\text{(sec)} = 4.61 \times 10^{5} \text{(photons/molecule)}$$

On the other hand, efficiency of detecting fluorescence photons is evaluated using known parameters as follows.

$$\begin{aligned} I_{abs} &= 4.61 \times 10^{5} \times 0.12 \times 0.563 \times 0.08 \times 0.60 \times 0.73 \times 1.4 \\ &= 1.53 \times 10^{3} \text{(photons/molecule)} \end{aligned}$$

where a quantum yield of the photocathode of the photon counting camera is 0.12 at the fluorescence maximum (520nm), and the upper limit of condensation efficiency of the objective (x 100, 0.75 NA) is 0.56 (=$0.75^2$), quantum efficiency ($\eta_1$=12%) around 520 nm, available transparency ($T_1$=8%)[21] and the maximum fluorescence collection efficiency ($\eta_2$=$NA^2$=56.3%) of the objective, the transparency of the DSFL fluorescence photons through the band-path filter and the dichroic mirror ($T_2$=60%), the enhancement of the fluorescence collection by the silicon wefers ($\eta_3$=140%), and the total transparency ($T_3$=73%) of other optics between the objective and the photocathode in the photon-counting apparatus. Note that the surface of the silicon wafers are as smooth as a mirror, thereby improving fluorescence collection efficiency.

In Fig. 17, a minimum unit of the quantized fluorescence intensity is $10^3$ (photons), and this is considered to be the number of the fluorescence photons which can be measured from one fluorescent molecule. Thus, the number of the actually observed photons $10^3$ is consistent with the calculated result ($I_{abs}$ = 1.53 x $10^3$ photons/molecule).

In the case that a polarization direction of laser beam as the excitation light is parallel with the sheet of the drawing (X-Z surface) as shown in Fig. 19, a direction of transition moment of a fluorescent molecule to be measured is important.

When a direction of the fluorescent molecules is fixed on the substrate 20, light excitation efficiency, in the case that the fluorescent molecules are excited by light with a set polarization direction, depends on the transition moment of the fluorescent molecules, and on an angle of the excitation light to the polarization direction. That is, when both are parallel with each other, the light excitation efficiency is maximum, and no excitation takes place when both are normal to each other.

When both form different angles for respective fluorescent molecules, the quantized fluorescence intensities (the number of fluorescence photons) in Fig. 17 will not be obtained. To understand the results of Fig. 17, it is necessary to consider that the respective fluorescent molecules are moving.

"PHYSICAL REVIEW LETTERS, Vol. 48, No. 7, pp. 478-481, 1982" and "CHEMICAL PHYSICS LETTERS, Vol. 114, No. 1, pp. 103-108, 1985" disclose that the dye (fluorescein) which has produced the results of Fig. 17 has a transition moment making a precession as shown in Fig. 19, at 53±2° to the vertical line with respect to the surface of the substrate 20. In this state, since the vertically polarized excitation light interacts with a z-axis component of the transition moment, constant excitation efficiency can be obtained with respect to all the fluorescent molecules.

It is understood from the above that a fluorescence intensity proportional to the number of fluorescent molecules can be observed. In other words, fluorescence photons are counted, whereby, based on a count value, the number of fluorescent molecules in one fluorescent spot corresponding to one molecule-group can be seen.

Thus the measurement of the number of fluorescent molecules on two kinds of fluorescent molecules concerning a protein with fluorescent substances, and diluted fluorescent molecules was successful.

In the prior art, the background light has such a large contribution that fluorescence from respective fluorescent molecules is buried in the background light and cannot be detected. But this invention has succeeded in making the detection possible and is a great breakthrough. This invention is applicable to various analyses. This invention will make great progress in automation of immunoassay, chromatography and DNA analysis, and will enable super-high speed fluorescence analysis.

As described above, a single molecule can be detected by causing fluorescent molecules to be adsorbed on the surfaces of solid substrates at room temperature, and detecting locations and the number of fluorescent molecules by two-dimensional photon counting method. Locations of single molecules are detected by means of a conventional optical microscope, based on fluorescent spots at a limit of its resolution. Fluorescent spots are scattered in a field of the microscope, and the number of the molecules in a fluorescent spot is a very important factor in detecting single molecules, depending on intensities of fluorescence from the fluorescent spot. According to the above-described method, one molecule is present in one fluorescent spot, whereby the detection of single molecules is enabled.

In the conventional wet-type detection in which fluorescent molecules to be measured are dissolved in a solvent, Raman scattering in the solvent (water or others) causes background noises, which makes the measurement very difficult. According to the method of this invention, single molecules can be well detected by selecting a suitable substrate, It is very convenient and effective to use ultrasonic waves (created from ultrasonic humidifiers or others) on the substrate. Salts deposited from buffer liquids are sometimes present on the substrate together with fluorescent molecules to be measured, and sometimes determine levels of background noises. Buffer liquids are not always necessary to prepare a specimen solution depending on kinds of fluorescent molecules, but a buffer liquid has to be carefully selected.

Furthermore, fluorescent molecules to be measured, adsorbed on the substrate well, and the substrate can be used in other measurements and are usable in the measurement by, e.g., STM and ATM, which are microscopes with good space resolution. It is possible to use STM or ATM to confirm presence of single molecules, and use fluorescence from fluorescent molecules as means for discriminating kinds of the fluorescent molecules (it is needless to say that the detection method of this invention, which uses fluorescence, can discriminate kinds of molecules). The method of this invention can be one method for determining sequences of bases constituting a single fragment of nucleic acid. That is, the bases of DNA are cut off one by one from the end, using exonuclease III , and the bases are discriminated one by one. In this case, the base are placed on predetermined positions on the substrate which are determined by a cut sequence.

U.S. Patent No. 4,962,037 discloses that the base could be cut off sequentially from the end of a single fragment of nucleic acids by using a solution containing the above-described enzyme, exonuclease III. (Measurement of a sequence of bases constituting a single fragment of nucleic acid)

Fig. 20 shows a block diagram of one example of the device used in the method for determining a sequence of bases of nucleic acid. This device comprises an excitation light source 30 for irradiating excitation light to a fine area on the surface of a substrate 20, and fluorescence detecting means for detecting fluorescence from bases at the irradiation position of the excitation light and identifying kinds of the bases. The substrate 20 has a very high speculum degree, e.g., a silicon wafer. Nucleic acid of bases as fluorescent molecules are caused to adsorb on the surface of the substrate by the above-described method. The substrate 20 is placed in a clean booth of class 1000 or less to be placed in a clean atmospheric air or inert gas (for example, Nz, Ar, etc. and an arbitrary complex gas of these elements).

This device may include the above-described photon counting system A to identify locations of the respective bases. Means for moving a local area (area for excitation light to be irradiated to) on the substrate 20 may be the above-described moving means (Fig. 4)

In Fig. 20, it is preferred that the excitation light source 30 can irradiate excitation light to a position on the substrate where bases are adsorbed and is, e.g., a laser beam since coherent laser beams are preferred. When the laser beam source has a wavelength of 300 nm or less, a pulse laser can be used. Excitation light (eg a laser beam) is condensed by a lens 32. The excitation light source 30 is arranged in such a manner that the excitation light enters slantly as shown in Fig. 21, and reflected beams on the substrate 20 slantly propagate.

A photon counting system A may be included to identify locations of bases in a local area. In this case, as shown in the above Fig. 2, the system A is provided by an imaging/image synthesizing system (ARGUS 50 VIM 3) by Hamamatsu Photonics K.K. with an optical microscope 42 mounted on. The system A can two-dimensionally count fluorescent photons and perform two-dimensional photodetection, whereby locations of the bases can be identified. The optical microscope 42 is for condensing fluorescence from the bases on the substrate 20 and has high magnifications (variable magnification). A photon-counting camera 40 is connected to an imaging/image analyzing system, so that signals are accumulated (fluorescence photon counting), images are processed, records are preserved, and images are displayed, whereby a presence of respective bases can be detected.

A half mirror 56 is for branching fluorescence from the bases on the substrate 20, and branches a larger light amount to a polychromator 52. The polychromator 52 measured fluorescence spectra, and a fluorescence lifetime measuring device 54 measures lifetime of fluorescence. They are provided by an photomultiplier or a streak camera. These members identify the different kinds of bases which fluoresce. In place of the half mirror 56, these members, and the photon-counting camera 40 may be mechanically or optically changed over.

The substrate 20 is controlled by the drive means as shown Fig. 4 in its position and rotation so that an area on the substrate 20 can be controlled to be in a field of the optical microscope 20 and the photon counting camera 40.

That is, as shown in Fig. 21, the substrate 20 is run at a constant speed in the direction indicated by B. A part of the substrate 20 near an area to be irradiated with excitation light is cooled by cooling means 34.

Fluorescence (autofluorescence) intrinsic to the different kinds of base at room temperatures is so feeble that it is necessary to multiply intensities of fluorescence of all the bases.

For example, "Photochemistry Photobiology, vol. 7, pp. 189-201, 1968" reports it was confirmed that increase of autofluorescence of base A (adenine) can be obtained by lowering temperatures. "Photochemistry Photobiology, vol. 7, pp. 597-612, 1968" reports it was confirmed that increase of autofluorescence of all the bases can be obtained by lowering temperatures.

The cooling means is specifically provided by the cooling end 34a of a cryostat led to the underside of the substrate 20 (e.g., copper block) as shown in Fig. 22, burying balls 34b with high heat conductance between the cooling end 34a and the substrate 20 as shown in Fig. 23, blowing cooling gas (e.g., helium gas) 34d through a pipe 34c as shown in Fig. 24. This cooling has an effect that bases themselves constituting a single fragment of nucleic acid have increased fluorescence as temperatures lower, and dye deterioration is suppressed.

Then the method for determining a sequence of bases of nucleic acid using this device will be explained with reference to the procedures thereof.

First, as shown in Fig. 25, liquid droplet 24 containing base separated from a nucleic acid (e.g., DNA) are dropped onto the substrate to prepare the substrate 20 with the bases adsorbed on (Fig. 26)

The substrate 20 is moved by the moving means as shown in Fig. 4. The substrate 20 is horizontally rotated so that the bases are circumferentially moved to be cut off radially inward and fall liquid droplets 24 containing the bases. In this invention the substrate 20 is a disk, which produces the effect of downsizing the device, and other effects.

It is necessary that sizes of the liquid droplets be as uniform as possible. For example, "Anal. Chem., 1992, 64, 2914-2919" describes a liquid drop generating device which can form substantially 10 µm-diameter liquid droplets.

The flow cell 10 specifically has the structure diagrammatical shown in Fig. 27 and includes 12 supersonic traps 12 in the main body 11. Each supersonic trap 12 has a piezo-element 13 and is connected to a piezo-drive circuit by a line 14. Liquid containing separated bases of DNA is caused to flow through a flow passage 15 of the flow cell 10, and the piezo-element 13 forms standing waves which separate and drop the liquids as shown in Fig. 27. On the other hand, the substrate 20 is rotated at a constant speed by the drive mechanism of Fig. 4 so that a position for a liquid droplet to be fallen onto comes at the center (Fig. 25). Dropped bases stick to the substrate on run in the direction of the arrow C at a substantially constant interval so that one liquid droplet comes into a field of the optical microscope 20.

Nucleic acid is cut off sequentially from the end of a single fragment using a solution containing an enzyme, exonuclease III as described in the immediately above-mentioned reference. The nucleic acid kept in good state at about 37 °C can be cut off at a speed of about 100 pieces/s using the above-described enzyme, and the liquid droplets in fine particles are dropped from the flow cell 10 at a speed of about 300 pieces/s. The frequency of the standing waves adjusted in such a manner that the fine particles dropped from the flow cell 10 have an about 30 µm diameter, and taking account of Poisson's equation, one liquid droplet contains one base. Thus the substrate 20 with a single base spirally one after another stuck thereto can be prepared.

Idealistically, conditions which lower the possibility of one liquid droplet containing two or more bases are preferred (e.g., a preferred average number is 0.1 or less).

According to this invention, liquid droplets 24 containing bases, and liquid droplets 24 not containing the bases are present on the substrate 20, which is the best method for perfectly recognizing a sequence of the bases.

Then, the substrate 20 with the liquid droplets 24 stuck thereto is dried to remove the solvent. Accordingly, the substrate 20 has solvent molecules which cannot be removed by drying, and the bases stuck to. Since it is very possible that removal of the solvent molecules (heating or vacuum drying) will remove fluorescent molecules (bases) from the substrate 20, the solvent molecules are left on the substrate 20. Drying is effective to decrease Raman scattering from the solvent, and suppress die deterioration. The air-drying may be conducted together with cooling. The substrate 20 of silicon can be a good specimen. This will be because dangling bonds are actively bonded.

The substrate 20 with the bases thus stuck thereto is mounted on the device of Fig. 20, and the moving means of as shown in Fig. 4 is driven to bring a visual field of the optical microscope 42 near a position where a first one of the liquid droplets to be measured is present. While laser beams are being irradiated, fluorescence from the bases is detected by the fluorescence photon counting system A, and a first one of the bases on the substrate 20 is observed to confirm that the base is within the visual field of the optical microscope 42. It is also confirmed that the base is one field piece. When a plurality of bases are present in the visual of the optical microscope 42, the visual field of the optical microscope 42 is displaced, or a magnification is selected so that one base is present in the visual field. Pulsed laser beams are irradiated from the excitation light source 30 to the base to be measured to excite the same, and a fluorescence wavelength and a fluorescence lifetime are measured by the polychrometer 52 and the fluorescence lifetime measuring device 54. Fluorescence from one molecule can enter visual fields of these members.

The fact that different kinds of respective bases can be identified based on fluorescence wavelengths and fluorescence lifetime is disclosed in U.S. Patent Application No. 07/968,868 or European Laid-Open No. 0 556 509 A2.

On the surface of the substrate 20 on which flurescent moleclues adsorb, Raman scattering is extremely little, and the background light has a small area. The laser beams from the excitation light source 30 are prohibited from entering the visual field of the optical microscope 42. The substrate 20 is provided by one (silicon wafer) of high speculum degree. Accordingly the background light has a small area. The background light has smaller areas especially in the reflected case rather than in the transmitted case. As a result, although fluorescence from the respective bases is very feeble, the fluorescence can be measured without being hidden by the background light. Since it is almost impossible that the excitation light may be injected into the fluorescence detecting means 40 by reflecting thereof, the excitation light does not become a noise component even when the polychrometer 52 has imperfect cut-off characteristics.

Based on differences of the thus-obtained fluorescence wavelengths and fluorescence lifetimes, the respective bases can be discriminated into A, T, G and C, and a nucleotide in the field of the optical microscope 42 can be identified as A, T, G or C. The fluorescence detection may be conducted off-line to elongate a detection period. Then an irradiation area of the laser beams, i.e., the visual field of the optical microscope 42 is moved by the moving means as shown in Fig. 4 to a next base stuck to the substrate to similarly identify the kind of the base. The observation of the base one after another, and a sequence of the base of a single fragment can be determined.

According to this invention, bases to be measured are stuck to the substrate, and while positional information of the respective bases are obtained, the different kinds of the bases are identified. The measurement can not only be executed repeatedly but also be used as a recording medium of nucleic acid.

In addition, the above-described embodiments can have variations.

For example, the substrate 20 is preferably a silicon wafer, but other semiconductors or insulators, or metals depending on cases may be used as long as substantially the same high flatness and speculum are available. But aluminum and gold vapor deposited films have disadvantages in that they are easily oxidized, and are vulnerable to damage . Metal substrates coated with silicon oxides can be used as the substrates 20 if they have high speculum degrees.

The optical microscope 42, the polychrometer 52 and the fluorescence lifetime measuring device 54 may be arranged as in Fig. 28. In this arrangement, a reflecting mirror 25 reflects fluorescence from fluorescent molecules (bases, etc.) to the polychrometer 52 and the fluorescence lifetime measuring device 54, whereby wavelengths and fluorescence lifetimes can be well measured.

A plurality of photon counting cameras 40 may be provided in the photon counting system A. When one detection is a failure, the detection may be repeated. This is because bases which have been once stuck to the substrate 20 do not change their positions. Light emission or fluorescence detection can be repeated.

There are light emitting reagents by bonding with bases A, T, G and C. It can be considered to coat the antibodies with these reagents to augment detection of the bases.

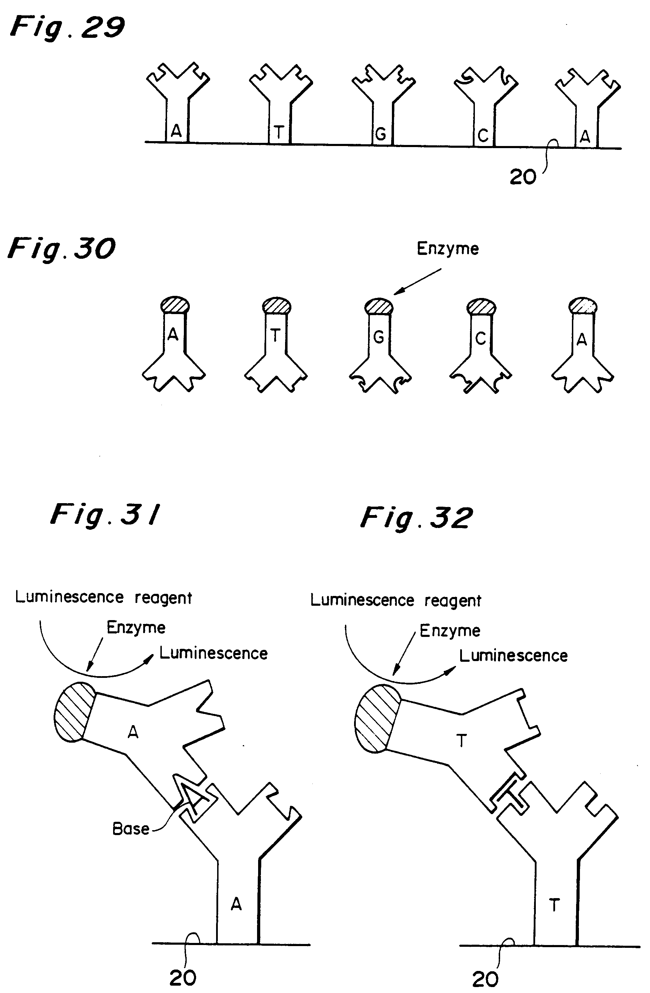

Monoclonal antibodies A, T, G and C, which comprise homogeneous molecules, have the characteristic of bonding specifically with base A to C. These monoclonal antibodies are beforehand applied to the substrate 20 (Fig. 29). Bases of nucleic acid are dropped by the flow cell 10 to bond the bases A to C with their corresponding antibodies A to C. The luminescent antibodies A to C have respective luminescent enzymes as shown in Fig. 30 and, in addition, the characteristics of specifically bonding with the bases A to C. The luminescent monoclonal antibodies A to C are dropped, and their surpluses are rinsed off. As a result, as shown in Fig. 31, a monoclonal antibody A on the substrate 20 bonds specifically with the base A, and further a luminescent antibody A on the substrate 20 specifically bonds with the base A. As shown in Fig. 32, a monoclonal antibody T on the substrate 20 bonds with the base T, and further a luminescent antibody T bonds with the base T. Thus, by varying wavelengths of the respective enzymes, it is possible to discriminate the bases by detection of the luminescence.

As described above, according to the method for determining a location of a molecule-group and the number of a fluorescence molecule type in the molecule-group, the background light can be suppressed sufficiently enough to detect fluorescence directly from a single fluorescent molecule (a base, etc.) to be measured. Accordingly the quantized fluorescence can be observed, whereby states (location and number) of the molecule (or the molecule-group comprising some molecules) sticking to the surface of the substrate can be detected.

According to the method and the device for sequencing bases of nucleic acid of this invention, fluorescence wavelengths and lifetimes of fluorescent molecules containing the bases on the surface of the substrate are measured after it is confirmed that each of the fluorescent molecules is in a single molecule state. Accordingly, bases contained in the single molecules can be correctly identified, and the bases are identified one after another, whereby a sequence of the bases can be determined at high speed and correctly.

From the invention thus described, it will be obvious that the invention may be varied in many ways. Such variations are not to be regarded as a departure from the scope of the invention, and all such modifications as would be obvious to one skilled in the art are intended to be included within the scope of the following claims.

## Claims

1. A method for determining a location of a molecule-group and the number of a fluorescent molecule type in the molecule-group, the method comprising:

   a first step of irradiating excitation light to a local area on a flat substrate with a molecule-group comprising fluorescent molecules adsorbed onto the local area of the substrate;
   a second step of measuring the number of fluorescence photons per unit period of time emitted by each fluorescent molecule type in the molecule group, which photons are created by irradiating said excitation light to said local area on said substrate, as a quantized fluorescence intensity of each of the fluorescent molecule types in said molecule-group; and
   a third step of measuring a position in said local area at which said fluorescent photons are emitted and analysing the measured number of fluorescence photons at said position to determine the number of said fluorescent molecule types in the molecule-group.

2. A method according to claim 1, wherein said fluorescent molecule in said molecule-group includes a complex of a protein and a predetermined number of substance emitting a fluorescence, or said substance emitting said fluorescence.

3. A method according to claim 1 or 2, wherein said excitation light includes a laser beam.

4. A method according to any preceding claim, wherein an irradiation angle of said excitation light to said flat substrate is set so as to avoid an angle which a reflected light from said irradiated excitation light effects on the detecting said fluorescence photon in said second step.

5. A method according to any preceding claim, wherein said second step further comprises a step of forming an appearance frequency distribution of said fluorescence photons for said unit period of time by plotting a pixel corresponding to a measuring position of said fluorescence photons on a two-dimensional image corresponding to said local area on said substrate, every time said fluorescence photons are detected by irradiating said excitation light.

**6.** A method according to claim 5, said third step further comprising a step of identifying a fluorescent spot where said molecule-group is present, based on said appearance frequency distribution of said fluorescence photons per said unit period of time displayed on said two-dimensional image, and determining the number of said fluorescent molecule type in said molecule-group, based on the number of said fluorescence photons measured in said fluorescent spot.

**7.** A device for determining a location of a molecule-group and the number of a fluorescent molecule type in the molecule-group, the device comprising:

a light source (30) for irradiating excitation light to a local area on a flat substrate (20) with a molecule-group comprising adsorbed fluorescent molecules adsorbed onto the local area of the substrate (20); and
fluorescence measuring means (40) for measuring the number of fluorescence photons per unit period of time emitted by each fluorescent molecule type in the molecule group, which photons are created by irradiating said excitation light to said local area on said substrate (20) as a quantized fluorescence intensity of each of the fluorescent molecule types in said molecule-group; and
means (45) for measuring a position in said local area at which said fluorescent photons are emitted and analysing the measured number of fluorescence photons at said position to determine the number of said flouresecent molecule types in the molecule-group.

**8.** A device according to claim 7, wherein said fluorescence measuring means (40) is disposed at a position which is out of an optical path of said excitation light irradiated from said light source (30) and of reflected light from a surface of said substrate (20).

**9.** A device according to claim 7 or 8, further comprising an optical microscope (41, 42) for condensing said fluorescence from said local area of said substrate, said fluorescence measuring means being arranged to count the number of fluorescence photons condensed by said optical microscope; and

means (45, 46) for displaying an appearance frequency distribution of said fluorescence photons on a two-dimensional image corresponding to said local area.

**10.** A device according to claim 9, wherein said means (45, 46) forms an appearance frequency distribution of said fluorescence photons for said unit period of time by plotting a total number of fluorescence photons corresponding to a measuring position of said fluorescent photon on a two-dimensional image corresponding to said local area on said substrate, each time said fluorescence photons are detected by irradiating said excitation light; and

identifies a fluorescent spot where said molecule-group is present, based on said appearance frequency distribution, and determines said molecule number of said fluorescent molecule in said molecule-group, based on the number of said fluorescent photon measured in said fluorescent spot.

**11.** A device according to claim 9 or 10, wherein said optical microscope (41, 42) has a changeable magnification.

**12.** A device according to any of claims 7 to 11, wherein said light source comprises a laser (30).

**13.** A device according to any of claims 7 to 12, further comprising moving means (101, 102) for moving said local area relative to said fluorescence measuring means.

**14.** A device according to claim 13, wherein said moving means includes an X-Y stage (100) which is movable horizontally relative to said fluorescence measuring means, and a rotary stage (103) supported by said X-Y stage (100) for fixing said substrate (20).

**Patentansprüche**

**1.** Verfahren zum Bestimmen der Position einer Molekülgruppe und der Zahl eines Fluoreszenzmoleküls in der Molekülgruppe mit

einem ersten Schritt zum Aufbringen von Anregungslicht auf einen lokalen Bereich auf einem ebenen Substrat mit einer Molekülgruppe, die Fluoreszenzmoleküle umfaßt, die an den lokalen Bereich des Substrates adsorbiert sind;

einem zweiten Schritt zum Messen der Zahl der Fluoreszenzphotonen pro Zeiteinheit, die von jedem Fluoreszenzmolekül in der Molekülgruppe emittiert und durch Aufbringen des Anregungslichtes auf den lokalen Bereich auf dem Substrat erzeugt werden, als quantizierte Fluoreszenzintensität eines jeden Fluoreszenzmoleküls in der Molekülgruppe; und

einem dritten Schritt zum Messen einer Position im lokalen Bereich, an der die Fluoreszenzphotonen emittiert werden, und zum Analysieren der gemessenen Anzahl von Fluoreszenzphotonen an dieser Position, um die Anzahl der Fluoreszenzmoleküle in der Molekülgruppe zu bestimmen.

**2.** Verfahren nach Anspruch 1, bei dem das Fluoreszenzmolekül in der Molekülgruppe einen Komplex aus einem Protein und einer vorgegebenen Zahl von fluoreszenzemittierenden Substanzen oder der fluoreszenzemittierenden Substanz umfaßt.

**3.** Verfahren nach Anspruch 1 oder 2, bei dem das Anregungslicht einen Laserstrahl aufweist.

**4.** Verfahren nach einem der vorangehenden Ansprüche, bei dem der Bestrahlungswinkel des Anregungslichtes auf das ebene Substrat so eingestellt wird, daß ein Winkel vermieden wird, bei dem vom aufgebrachten Anregungslicht reflektiertes Licht die Detektion des Fluoreszenzphotons im zweiten Schritt beeinflußt.

**5.** Verfahren nach einem der vorangehenden Ansprüche, bei dem der zweite Schritt des weiteren einen Schritt zur Ausbildung eines Frequenzverteilungserscheinungsbildes der Fluoreszenzphotonen für die Zeiteinheit umfaßt, indem jedesmal dann, wenn die Fluoreszenzphotonen durch Aufbringen des Anregungslichtes detektiert werden, ein Bildpunkt entsprechend einer Meßposition der Fluoreszenzphotonen auf einem zweidimensionalen Bild entsprechend dem lokalen Bereich auf dem Substrat dargestellt wird.

**6.** Verfahren nach Anspruch 5, bei der der dritte Schritt einen Schritt zum Identifizieren eines Fluoreszenzspots dort, wo die Molekülgruppe vorhanden ist, auf der Basis der Erscheinungsbildfrequenzverteilung der Fluoreszenzphotonen pro Zeiteinheit, die auf dem zweidimensionalen Bild dargestellt ist, und zum Bestimmen der Anzahl des Fluoreszenzmoleküls in der Molekülgruppe auf der Basis der Anzahl der im Fluoreszenzspot gemessenen Fluoreszenzphotonen umfaßt.

**7.** Vorrichtung zum Bestimmen der Position einer Molekülgruppe und der Zahl des Fluoreszenzmoleküls in der Molekülgruppe mit den folgenden Bestandteilen:

einer Lichtquelle (30) zum Aufbringen von Anregungslicht auf einen lokalen Bereich auf einem ebenen Substrat (20) mit einer Molekülgruppe, die adsorbierte Fluoreszenzmoleküle umfaßt, welche an den lokalen Bereich des Substrates (20) adsorbiert sind; und

Fluoreszenzmeßeinrichtungen (40) zum Messen der Anzahl von Fluoreszenzphotonen pro Zeiteinheit, die von jedem Fluoreszenzmolekül in der Molekülgruppe emitiert und durch Aufbringen des Anregungslichtes auf den lokalen Bereich auf dem Substrat (20) erzeugt werden, als quantisierte Fluoreszenzintensität eines jeden Fluoreszenzmoleküls in der Molekülgruppe; und

Einrichtungen (45) zum Messen einer Position im lokalen Bereich, an der die Fluoreszenzphotonen emittiert werden, und Analysieren der gemessenen Zahl der Fluoreszenzphotonen an dieser Position, um die Zahl der Fluoreszenzmoleküle in der Molekülgruppe zu bestimmen.

**8.** Vorrichtung nach Anspruch 7, bei dem die Fluoreszenzmeßeinrichtungen (40) an einer Stelle angeordnet sind, die außerhalb des optischen Weges des Anregungslichtes, das von der Lichtquelle (30) aufgebracht wird, und des von der Oberfläche des Substrates (20) reflektierten Lichtes liegt.

**9.** Vorrichtung nach Anspruch 7 oder 8, die des weiteren ein optisches Mikroskop (41, 42) zum Sammeln der Fluoreszenz vom lokalen Bereich des Substrates umfaßt, wobei die Fluoreszenzmeßeinrichtungen so angeordnet sind, daß sie die Zahl der vom optischen Mikroskop gesammelten Fluoreszenzphotonen zählen; und

Einrichtungen (45, 46) zum Anzeigen eines Erscheinungsbildes der Frequenzverteilung der Fluoreszenzphotonen auf einem zweidimensionalen Bild entsprechend dem lokalen Bereich aufweist.

**10.** Vorrichtung nach Anspruch 9, bei der die Einrichtungen (45, 46) das Erscheinungsbild der Frequenzverteilung oder Fluoreszenzphotonen für die Zeiteinheit bilden, indem die Gesamtzahl der Fluoreszenzphotonen entsprechend einer Meßposition des Fluoreszenzphotons auf einem zweidimensionalen Bild entsprechend dem lokalen Bereich auf dem Substrat jedesmal dann dargestellt wird, wenn die Fluoreszenzphotonen durch Aufbringen des Anregungslichtes detektiert werden; und

einen Fluoreszenzspot auf der Basis der Erscheinungsbildfrequenzverteilung identifizieren, wo die Molekülgruppe vorhanden ist, und die Molekülzahl des Fluoreszenzmoleküls in der Molekülgruppe auf der Basis der Zahl der im Fluoreszenzspot gemessenen Fluoreszenzphotonen bestimmen.

**11.** Vorrichtung nach Anspruch 9 oder 10, bei der das optische Mikroskop (41, 42) eine veränderbare Vergrößerung besitzt.

**12.** Vorrichtung nach einem der Ansprüche 7 bis 11, bei der die Lichtquelle einen Laser (30) umfaßt.

**13.** Vorrichtung nach einem der Ansprüche 7 bis 12, die des weiteren Bewegungseinrichtungen (101, 102) zum Bewegen des lokalen Bereiches relativ zu den Fluoreszenzmeßeinrichtungen umfaßt.

**14.** Vorrichtung nach Anspruch 13, bei der die Bewegungseinrichtungen einen X-Y-Tisch (100), der horizontal relativ zu den Fluoreszenzmeßeinrichtungen bewegbar ist, und einen Drehtisch (103) umfassen, der vom X-Y-Tisch (100) zum Fixieren des Substrates (20) gelagert wird.

**Revendications**

**1.** Procédé destiné à déterminer l'emplacement d'un groupe moléculaire ainsi que le nombre d'un type de molécule fluorescent dans le groupe moléculaire, le procédé comprenant :

une première étape consistant à faire rayonner une lumière d'excitation vers une zone locale sur un substrat plat comportant un groupe moléculaire comprenant des molécules fluorescentes adsorbées sur la zone locale du substrat,
une seconde étape consistant à mesurer le nombre de photons fluorescents par intervalle de temps unitaire émis par chaque type de molécule fluorescent du groupe moléculaire, lesquels photons sont créés en faisant rayonner ladite lumière d'excitation vers ladite zone locale sur ledit substrat, sous forme d'une intensité de fluorescence quantifiée de chacun des types de molécules fluorescents dudit groupe moléculaire, et
une troisième étape consistant à mesurer l'emplacement dans ladite zone locale au niveau duquel lesdits photons fluorescents sont émis et à analyser le nombre de photons de fluorescence au niveau dudit déplacement afin de déterminer le nombre desdits types de molécules fluorescents du groupe moléculaire.

**2.** Procédé selon la revendication 1, dans lequel ladite molécule fluorescente dudit groupe moléculaire comprend un complexe constitué d'une protéine et d'une quantité déterminée de substance émettant une fluorescence, ou bien ladite substance émettant ladite fluorescence.

**3.** Procédé selon la revendication 1 ou 2, dans lequel ladite lumière d'excitation comprend un faisceau laser.

**4.** Procédé selon l'une quelconque des revendications précédentes, dans lequel un angle de rayonnement de ladite lumière d'excitation vers ledit substrat plat est établi de manière à éviter que l'angle de la lumière réfléchie à partir de ladite lumière d'excitation rayonnée n'affecte la détection dudit photon de fluorescence dans ladite seconde étape.

**5.** Procédé selon l'une quelconque des revendications précédentes, dans lequel ladite seconde étape comprend en outre une étape consistant à réaliser une distribution de fréquences d'apparition desdits photons de fluorescence pendant ledit intervalle de temps unitaire en reportant le pixel correspondant à l'emplacement de mesure desdits photons de fluorescence sur une image bidimensionnelle correspondant à ladite zone locale sur ledit substrat, à chaque fois que lesdits photons de fluorescence sont détectés en faisant rayonner ladite lumière d'excitation.

**6.** Procédé selon la revendication 5, ladite troisième étape comprenant en outre une étape consistant à identifier la trace fluorescente dans laquelle ledit groupe moléculaire est présent, sur la base de ladite distribution de fréquences d'apparition desdits photons de fluorescence par dit intervalle de temps unitaire affichée sur ladite image bidimensionnelle, et à déterminer la quantité dudit type de molécule fluorescent dudit groupe moléculaire, sur la base du nombre desdits photons de fluorescence mesuré dans ladite trace fluorescente.

**7.** Dispositif destiné à déterminer l'emplacement d'un groupe moléculaire ainsi que la quantité d'un type de molécule fluorescent du groupe moléculaire, le dispositif comprenant :

une source de lumière (30) destinée à rayonner une lumière d'excitation vers une zone locale sur un substrat plat (20) comportant un groupe moléculaire comprenant des molécules fluorescentes adsorbées sur la zone locale du substrat (20), et
un moyen de mesure de fluorescence (40) destiné à mesurer le nombre de photons de fluorescence par intervalle de temps unitaire émis par chaque type de molécule fluorescent du groupe moléculaire, lesquels photons sont créés en faisant rayonner ladite lumière d'excitation vers ladite zone locale sur ledit substrat (20) sous forme d'une intensité de fluorescence quantifiée de chacun des types de molécules fluorescents dudit groupe moléculaire, et
un moyen (45) destiné à mesurer l'emplacement dans ladite zone locale au niveau duquel lesdits photons fluorescents sont émis et à analyser le nombre mesuré de photons de fluorescence au niveau dudit déplacement afin de déterminer la quantité desdits types de molécules fluorescents du groupe moléculaire.

**8.** Dispositif selon la revendication 7, dans lequel ledit moyen de mesure de fluorescence (40) est situé au niveau d'un emplacement qui se trouve en dehors du trajet optique de ladite lumière d'excitation rayonnée à partir de ladite source de lumière (30) et de la lumière réfléchie à partir de la surface dudit substrat (20).

**9.** Dispositif selon la revendication 7 ou 8, comprenant en outre un microscope optique (41, 42) destiné à condenser ladite fluorescence provenant de ladite zone locale dudit substrat, ledit moyen de mesure de fluorescence étant agencé de manière à compter le nombre de photons de fluorescence condensés par ledit microscope optique, et

un moyen (45, 46) destiné à afficher `une distribution de fréquences d'apparition desdits photons de fluorescence sur une image bidimensionnelle correspondant à ladite zone locale.

**10.** Dispositif selon la revendication 9, dans lequel ledit moyen (45, 46) réalise une distribution de fréquences d'apparition desdits photons de fluorescence pendant ledit intervalle de temps unitaire en reportant le nombre total de photons de fluorescence correspondant à l'emplacement de mesure dudit photon fluorescent sur une image bidimensionnelle correspondant à ladite zone locale sur ledit substrat, à chaque fois que lesdits photons de fluorescence sont détectés en faisant rayonner ladite lumière d'excitation, et

identifie la trace fluorescente dans laquelle ledit groupe moléculaire est présent, sur la base de ladite distribution de fréquences d'apparition, et détermine ledit nombre de molécules de ladite molécule fluorescente dudit groupe moléculaire, sur la base du nombre de dits photons fluorescents mesuré dans ladite trace fluorescente.

**11.** Dispositif selon la revendication 9 ou 10, dans lequel ledit microscope optique (41, 42) présente un grossissement pouvant être modifié.

**12.** Dispositif selon l'une quelconque des revendications 7 à 11, dans lequel ladite source de lumière comprend un laser (30).

**13.** Dispositif selon l'une quelconque des revendications 7 à 12, comprenant en outre un moyen de déplacement (101, 102) destiné à déplacer ladite zone locale relativement audit moyen de mesure de fluorescence.

**14.** Dispositif selon la revendication 13, dans lequel ledit moyen de déplacement comprend une platine X-Y (100) qui peut être déplacée horizontalement relativement audit moyen de mesure de fluorescence, ainsi qu'une platine rotative (103) supportée par ladite platine X-Y (100) destinée à fixer ledit substrat (20).

Fig. 1

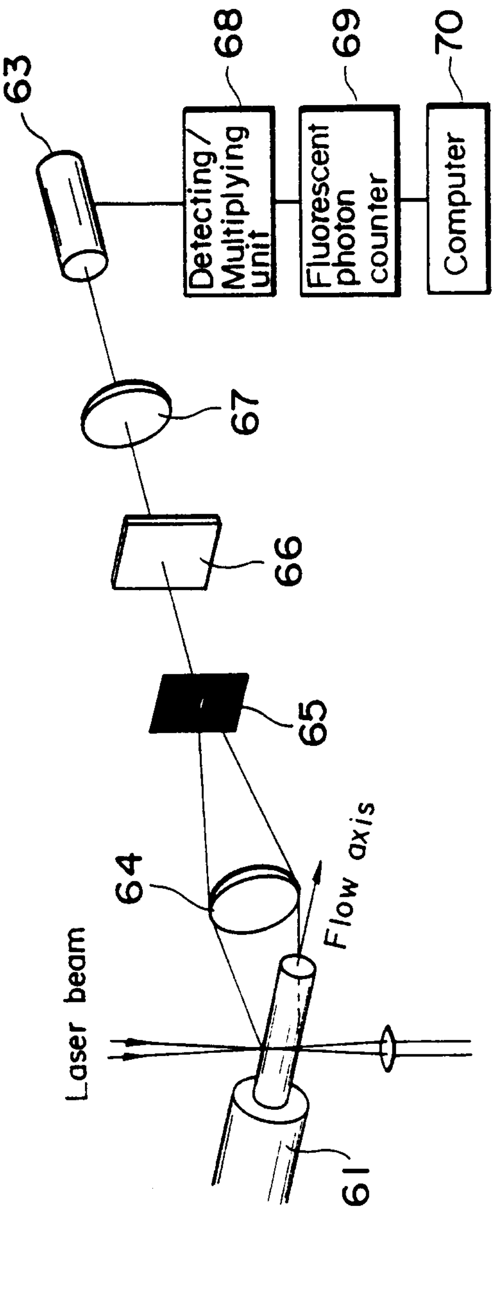
Laser beam
Flow axis
61
64
65
66
67
63
68
69
70
Detecting/
Multiplying
unit
Fluorescent
photon
counter
Computer

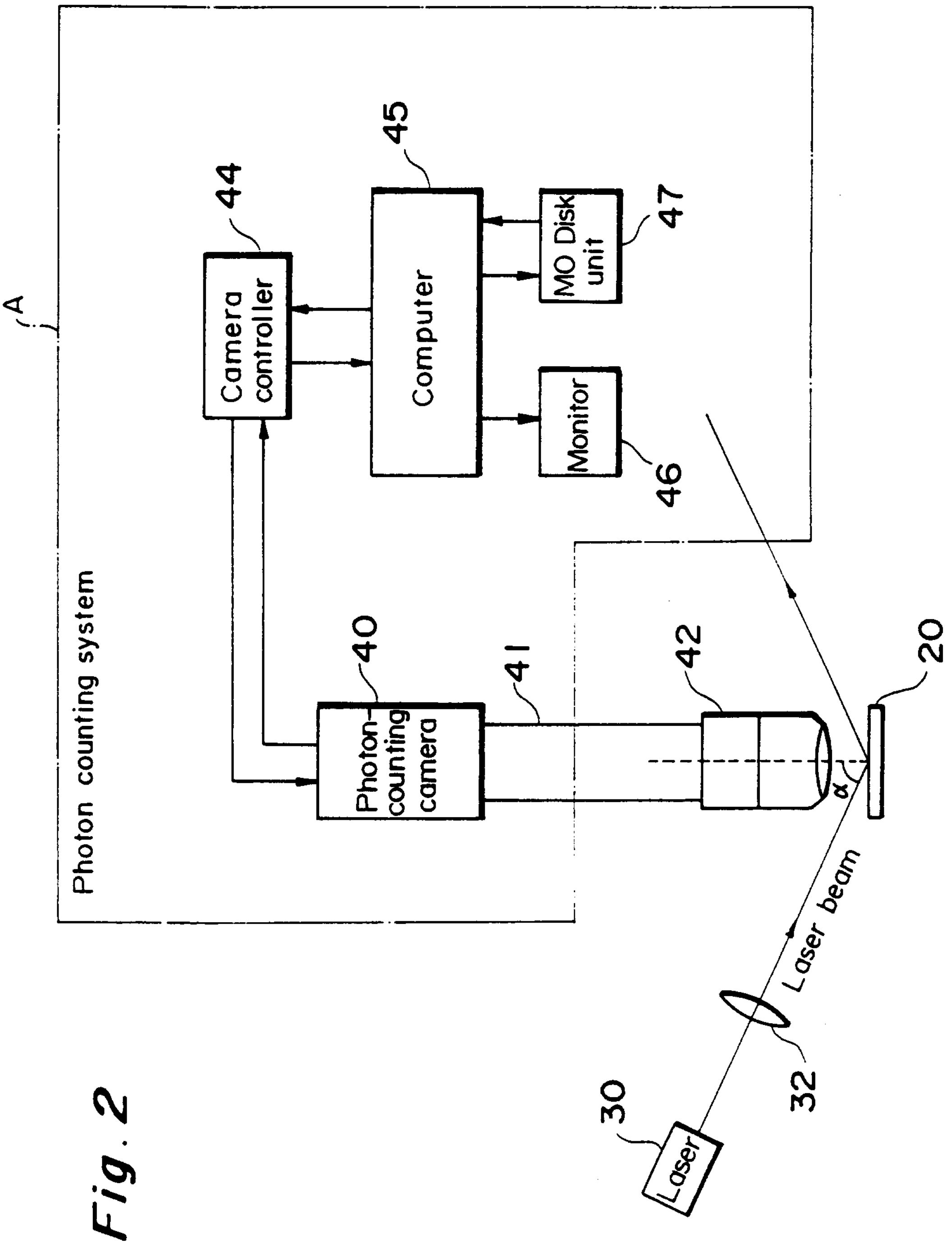
A
Photon counting system
Camera controller
44
Computer
45
MO Disk unit
47
Monitor
46
Photon-counting camera
40
41
42
20
α
Laser beam
32
Laser
30

Fig. 2

Fig. 3

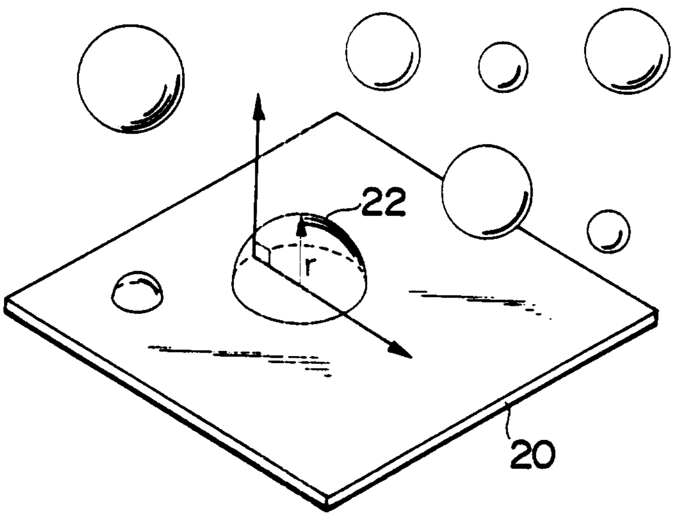


Fig. 4

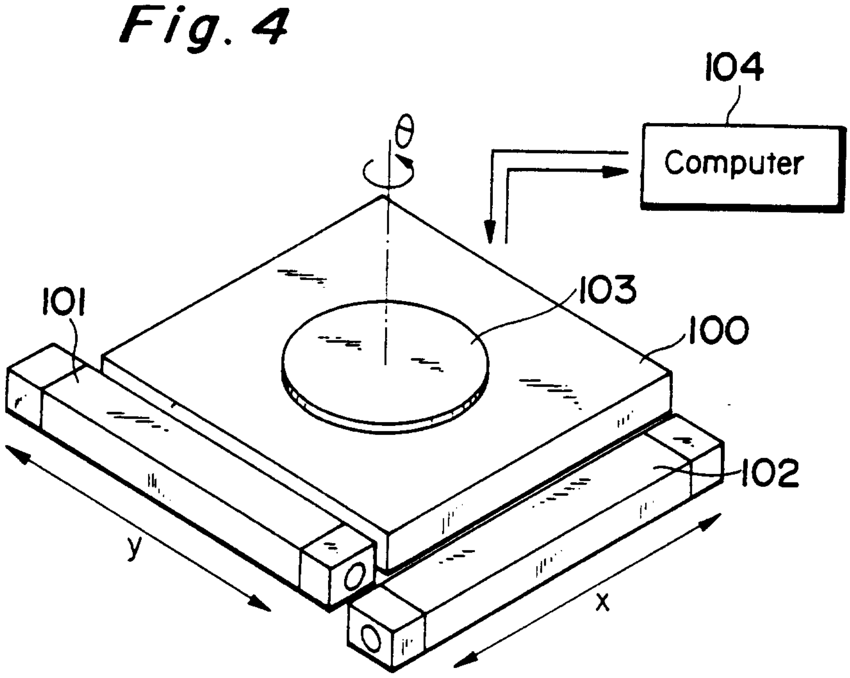

*Fig.5*

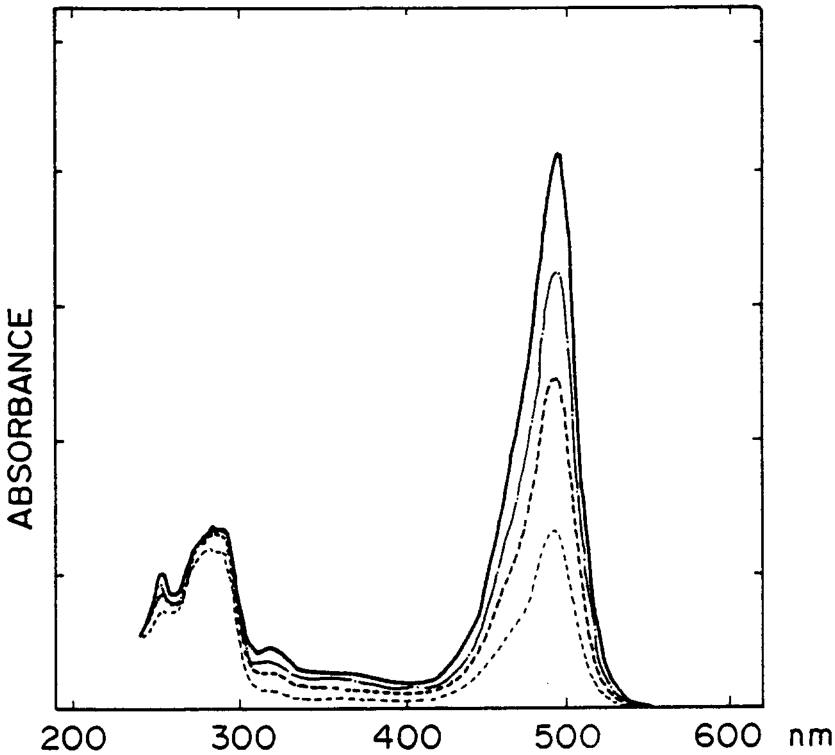
ABSORBANCE
200
300
400
500
600
nm

*Fig.6*

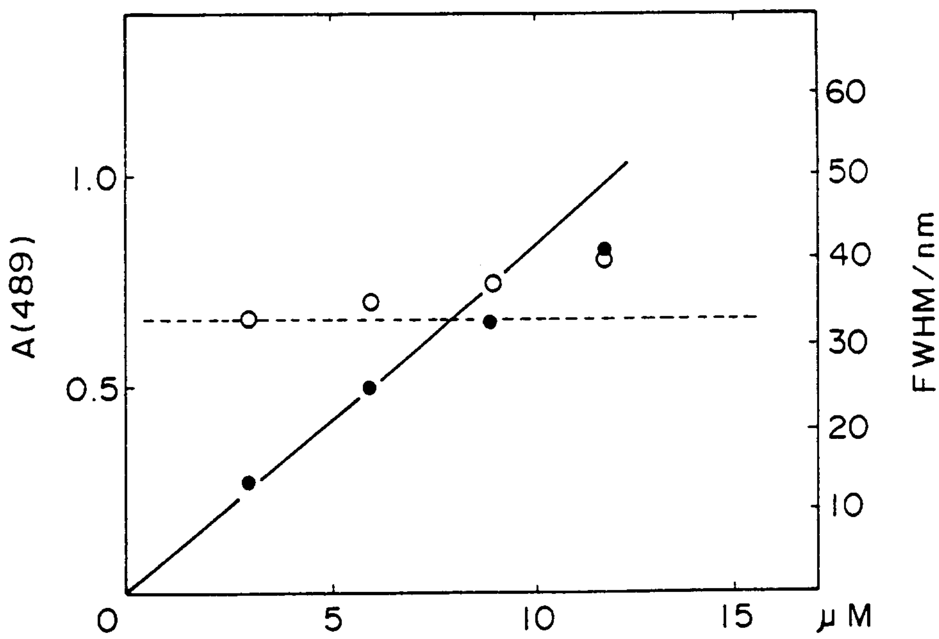
A(489)
1.0
0.5
0
5
10
15
μM
60
50
40
30
20
10
FWHM/nm

Fig. 7

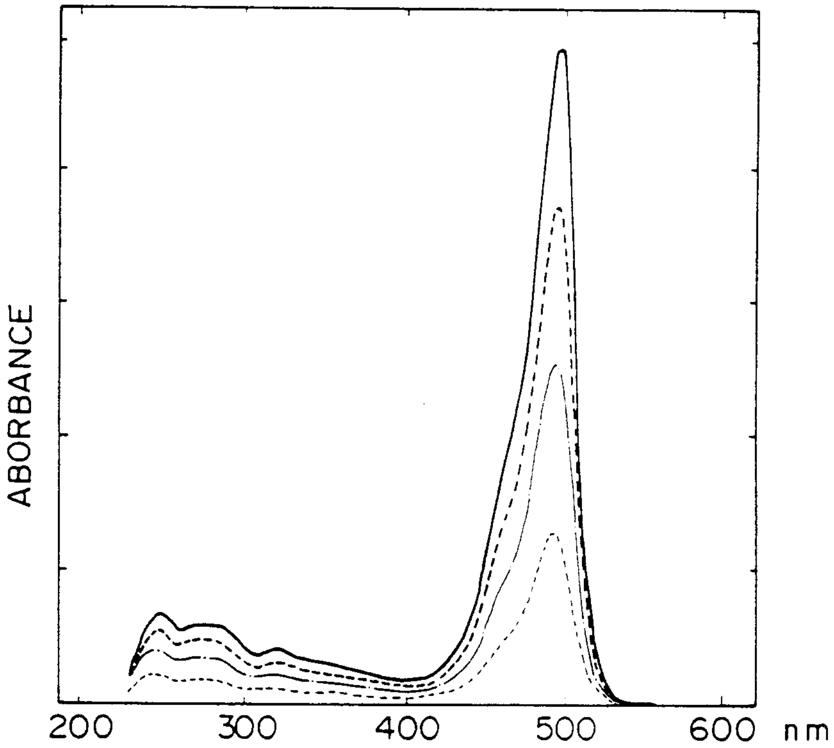
ABORBANCE
200
300
400
500
600
nm

Fig. 8

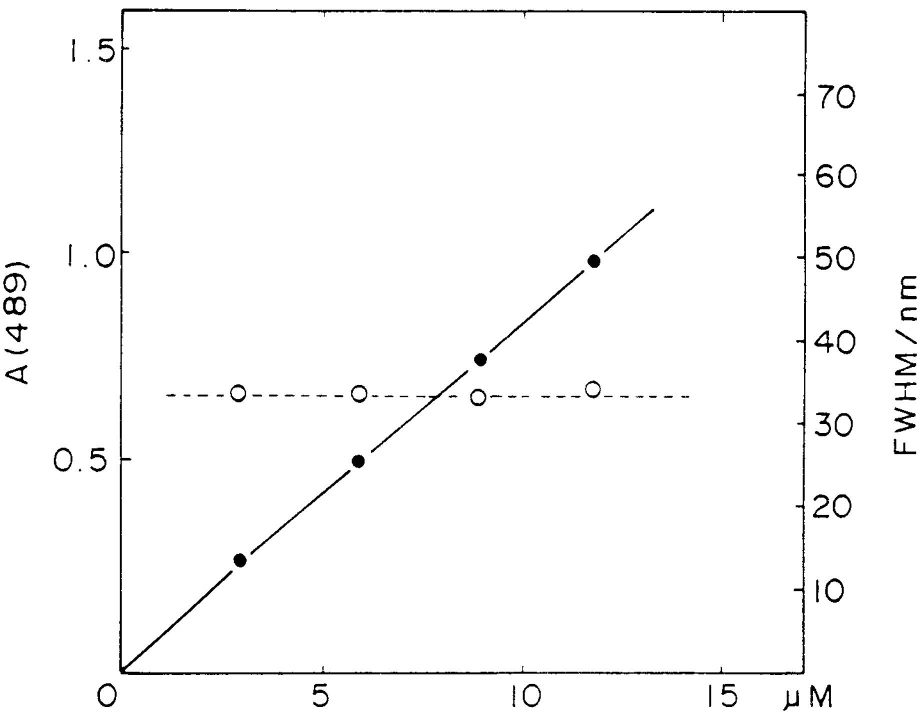
A (489)
1.5
1.0
0.5
0
5
10
15
μM
70
60
50
40
30
20
10
FWHM / nm

*Fig. 9*

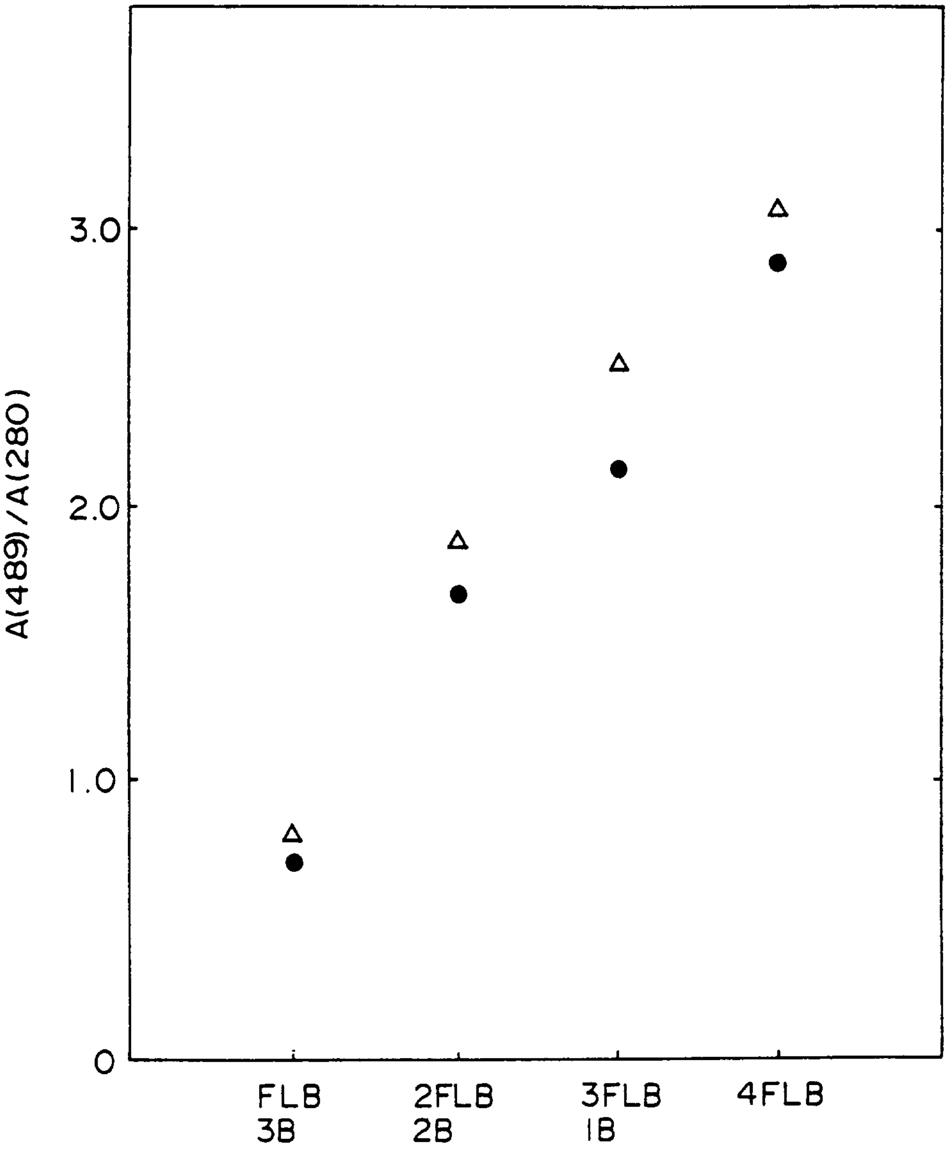

Fig. 10

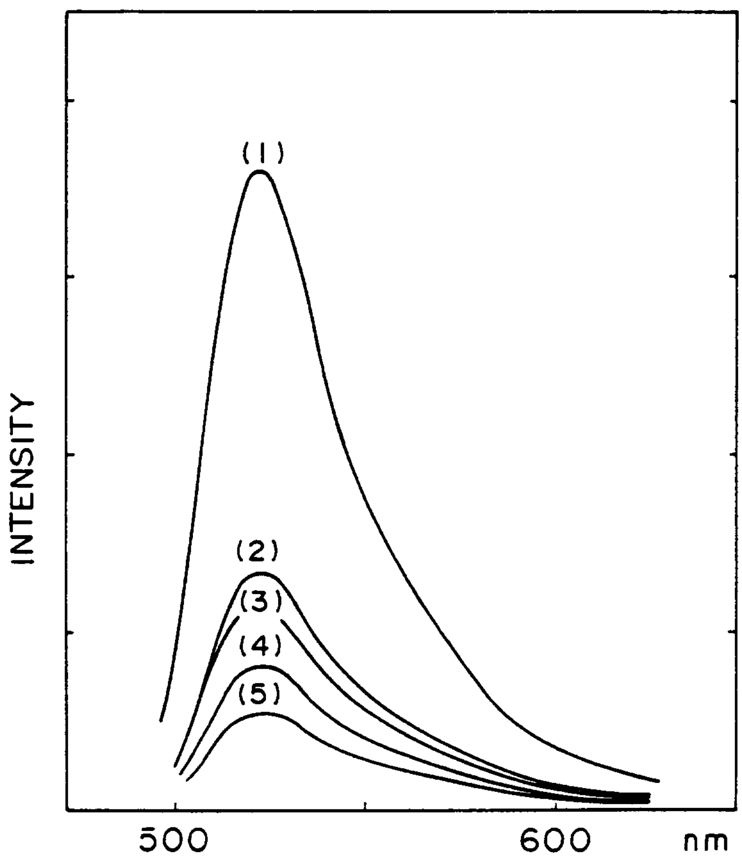
INTENSITY
(1)
(2)
(3)
(4)
(5)
500
600
nm

Fig. 11

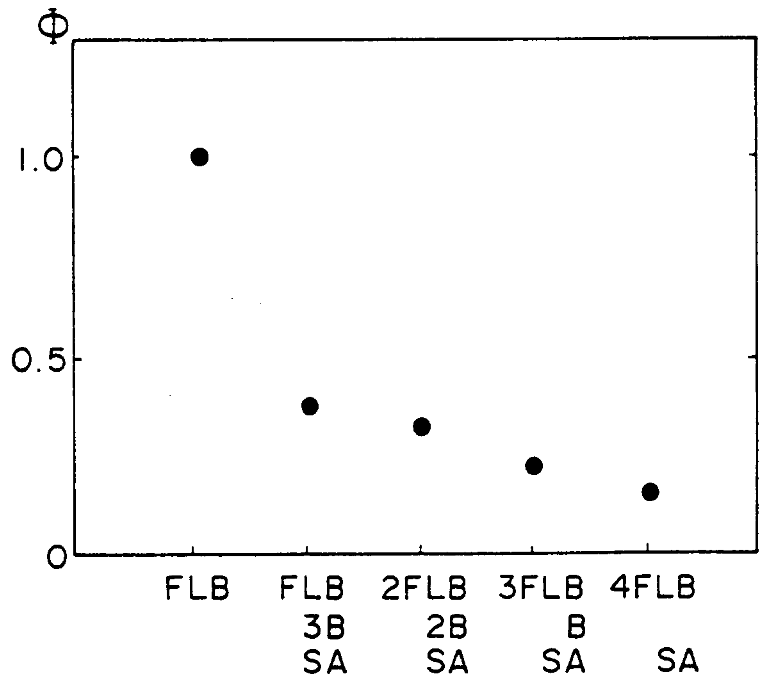
Φ
1.0
0.5
0
FLB
FLB
3B
SA
2FLB
2B
SA
3FLB
B
SA
4FLB
SA

Fig. 12

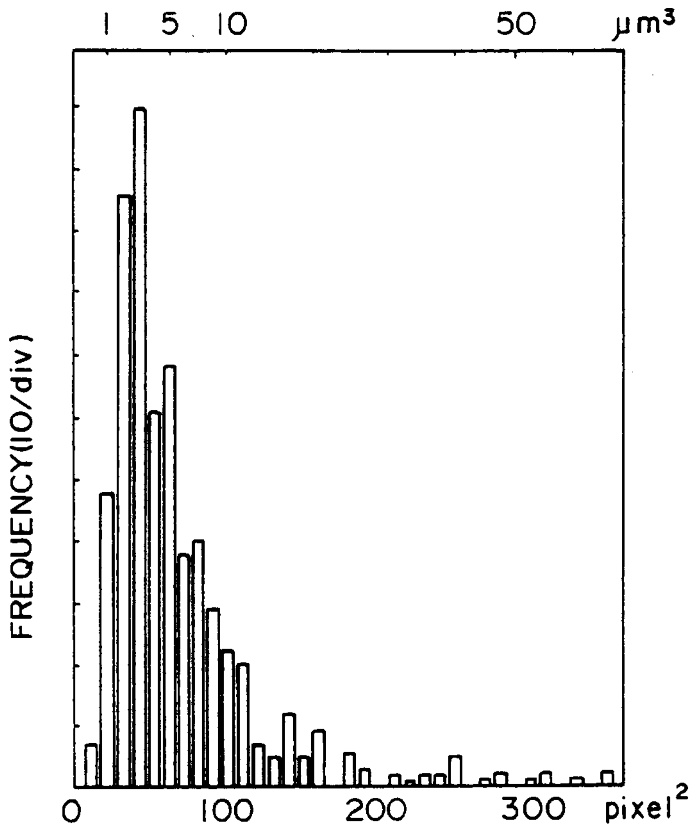


Fig. 13

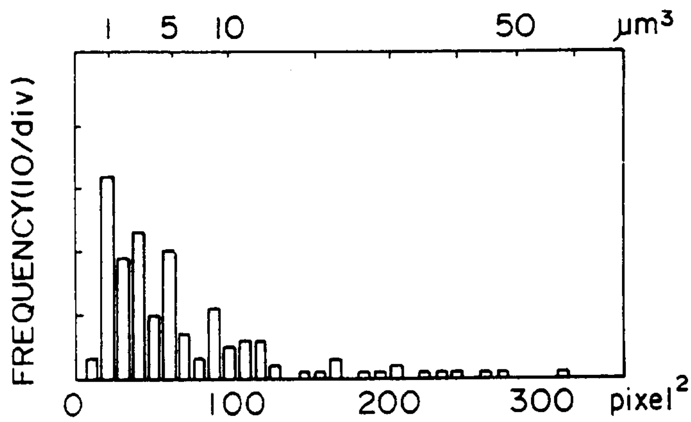


Fig. 14

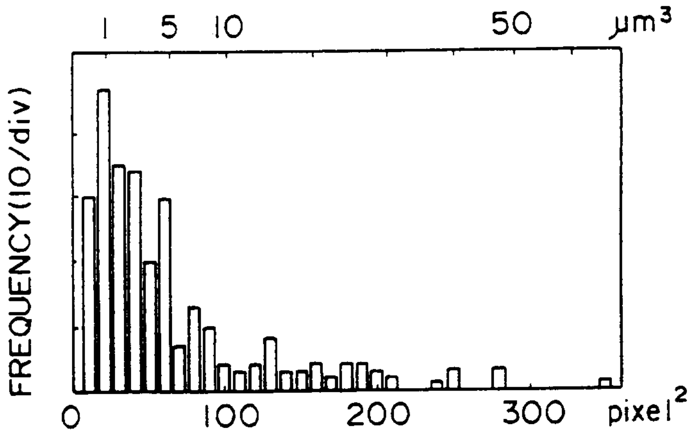

Fig. 15

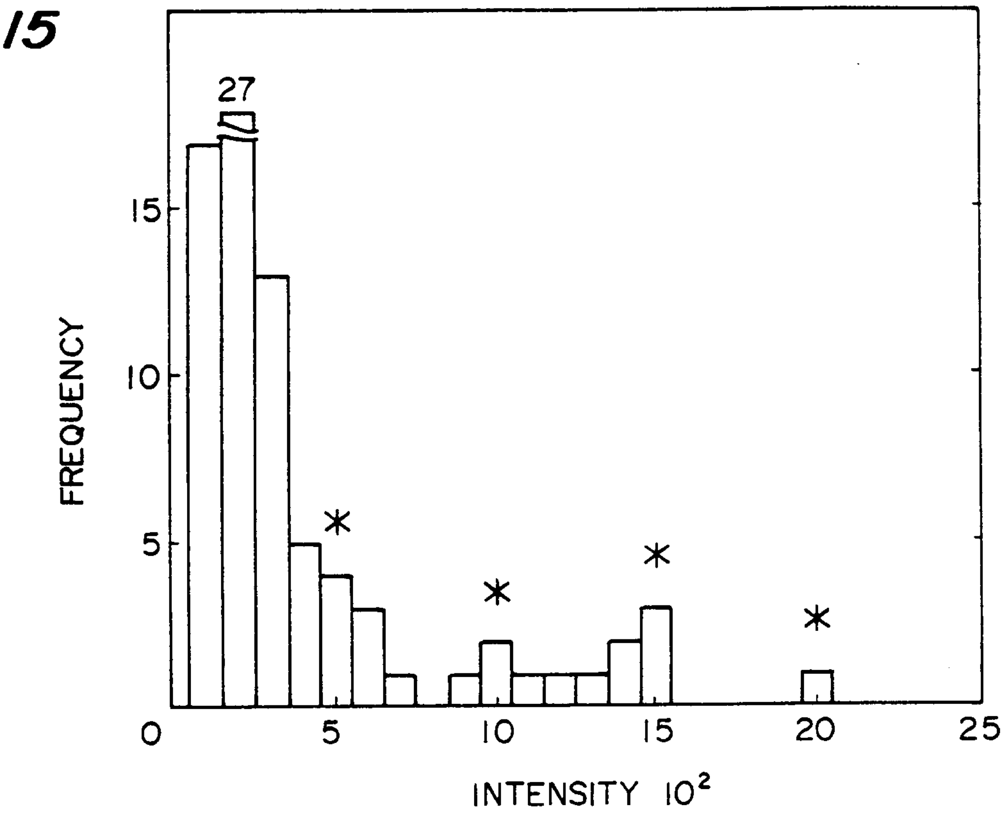
27
15
10
5
0
FREQUENCY
5
10
15
20
25
INTENSITY 10²

Fig. 16

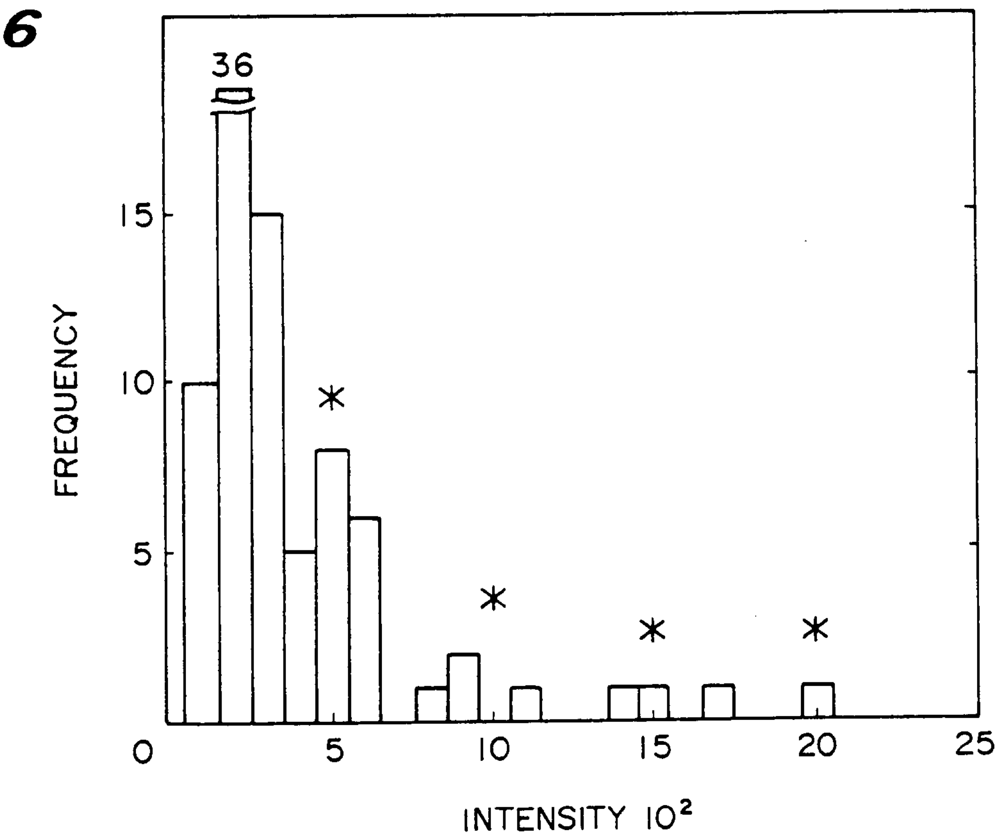
36
15
10
5
0
FREQUENCY
5
10
15
20
25
INTENSITY 10²

Fig. 17

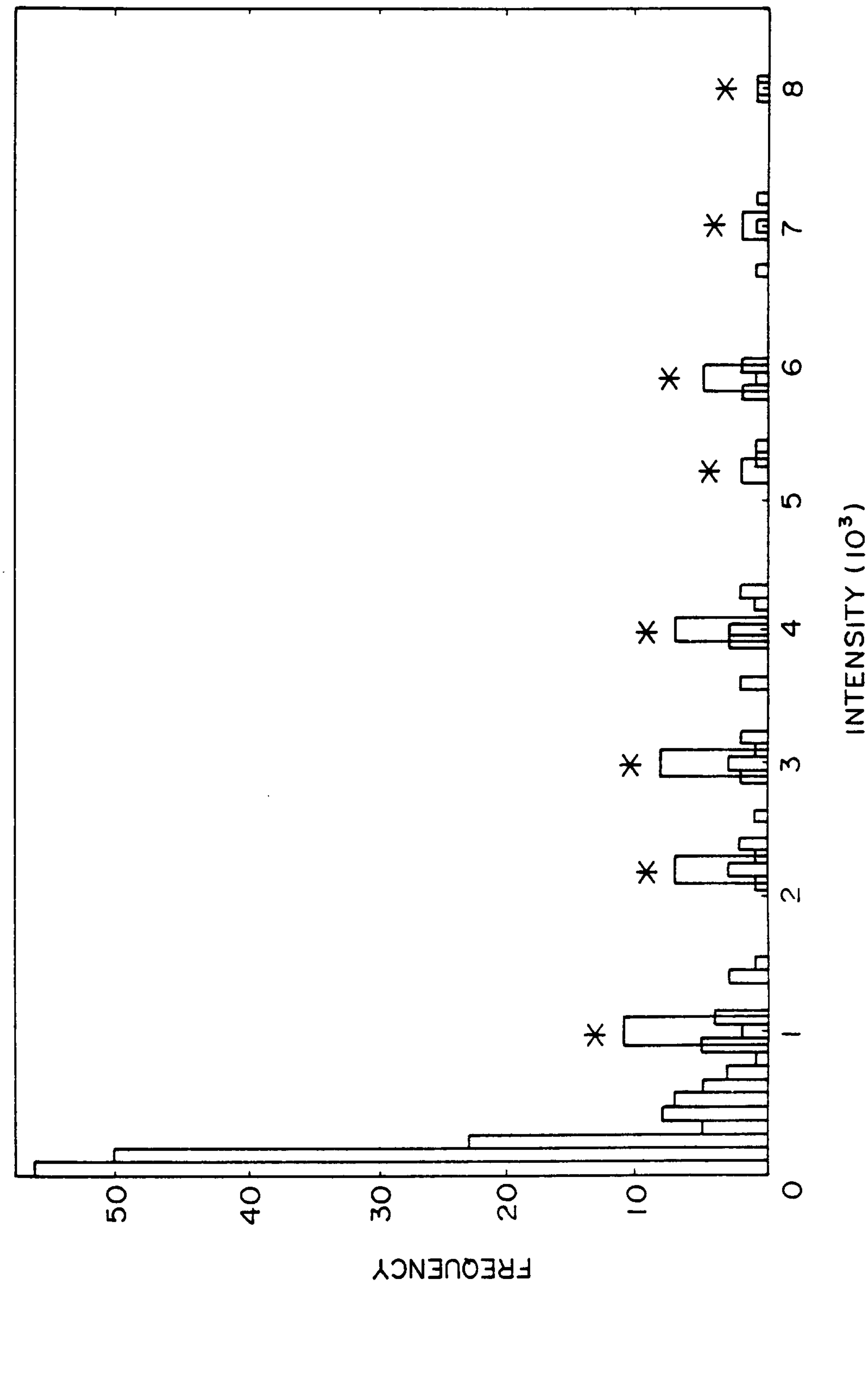

Fig. 18

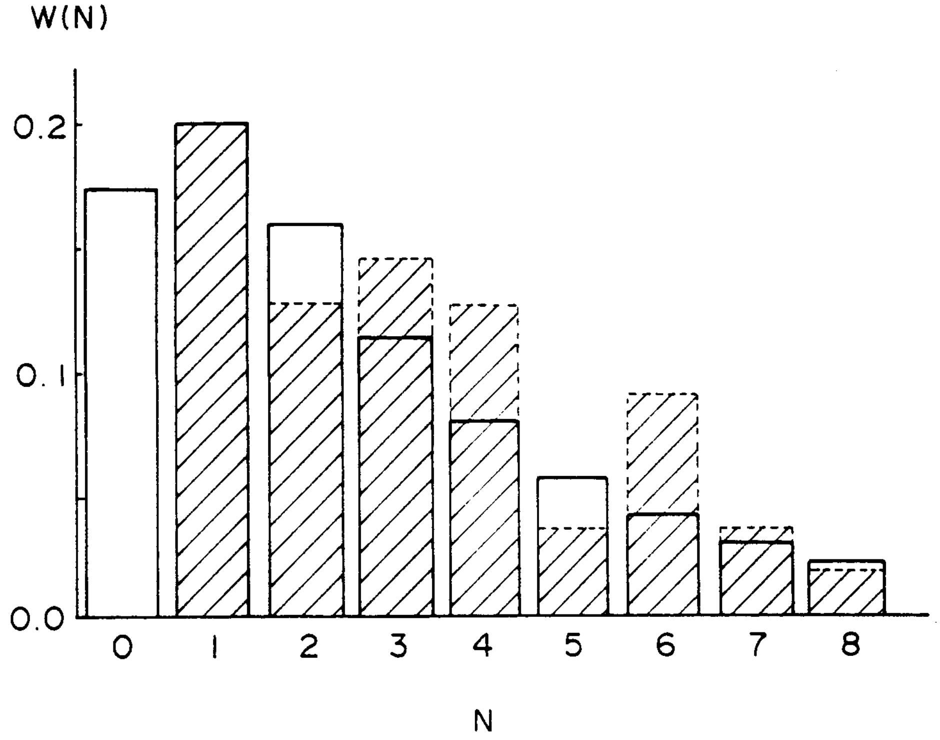
W(N)
0.2
0.1
0.0
0
1
2
3
4
5
6
7
8
N

Fig. 19

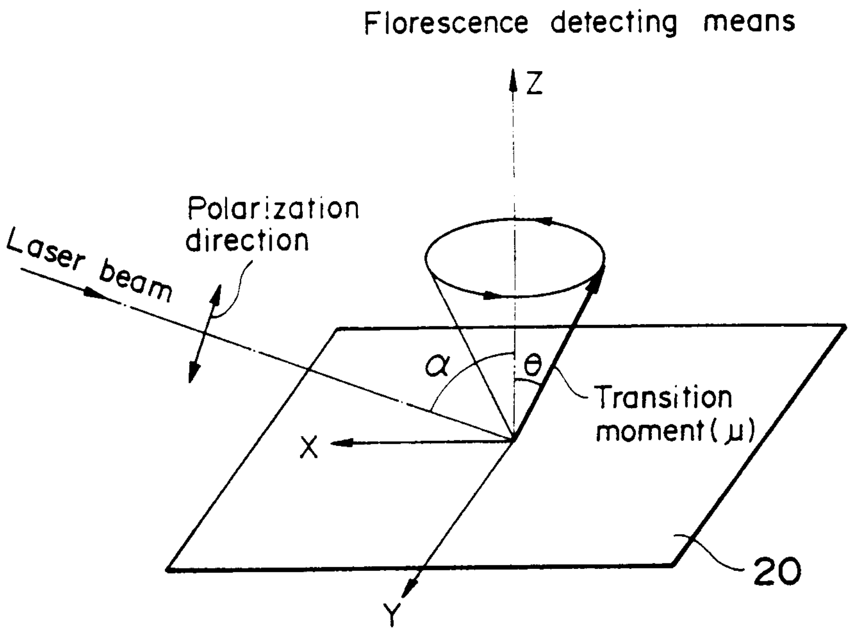
Florescence detecting means
Z
Polarization direction
Laser beam
α
θ
Transition moment (μ)
X
Y
20

*Fig. 20*

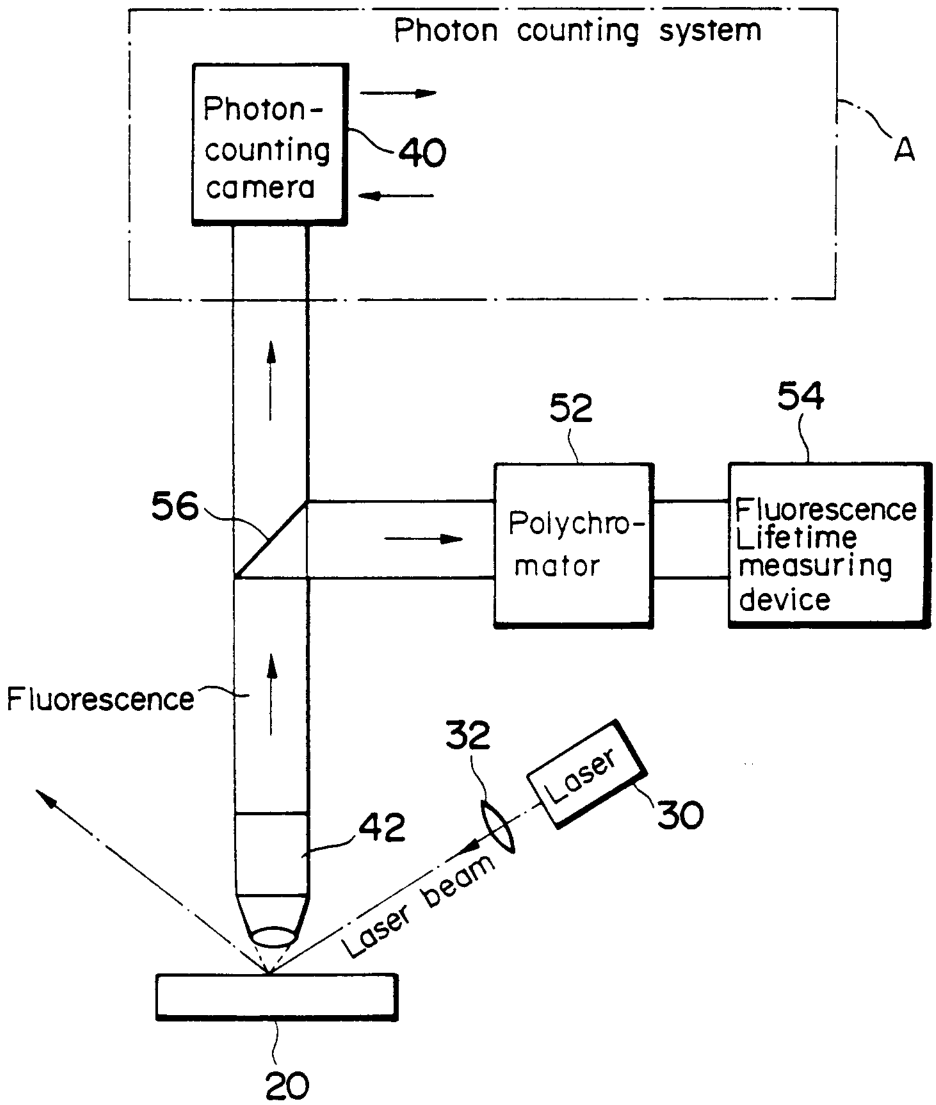
Photon counting system
Photon-counting camera
40
A
52
54
56
Polychro-mator
Fluorescence Lifetime measuring device
Fluorescence
32
Laser
30
42
Laser beam
20

Fig. 21

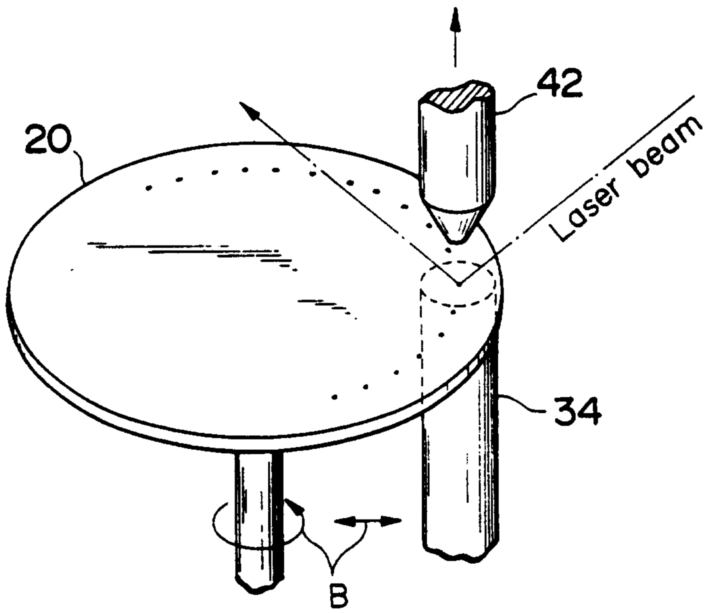

*Fig.22*

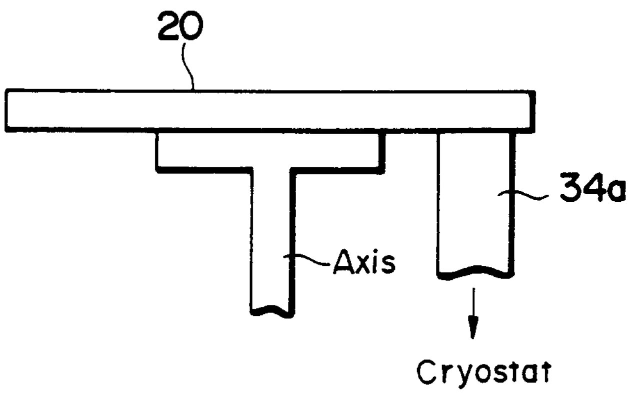


*Fig.23*

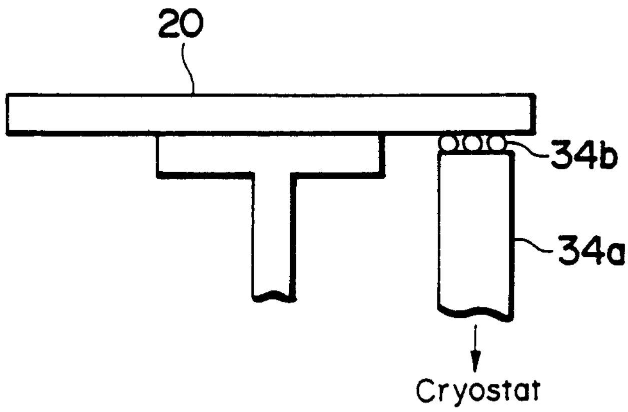


*Fig.24*

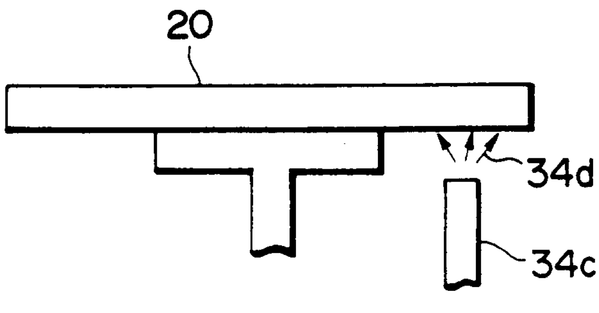

Fig.25

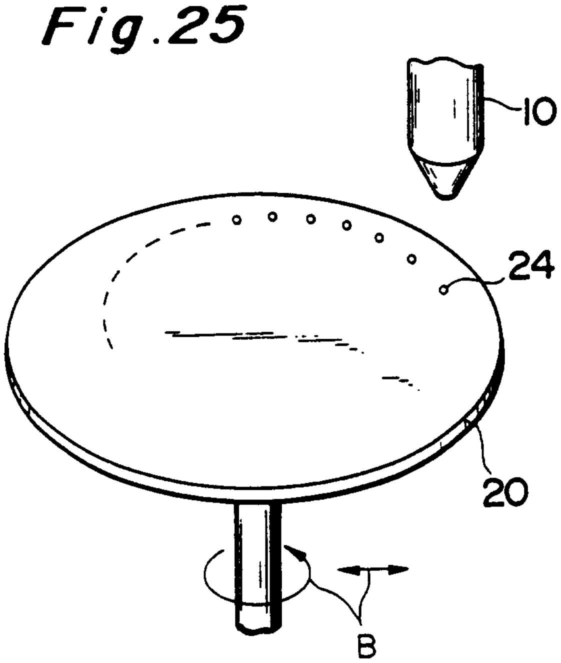


Fig.26

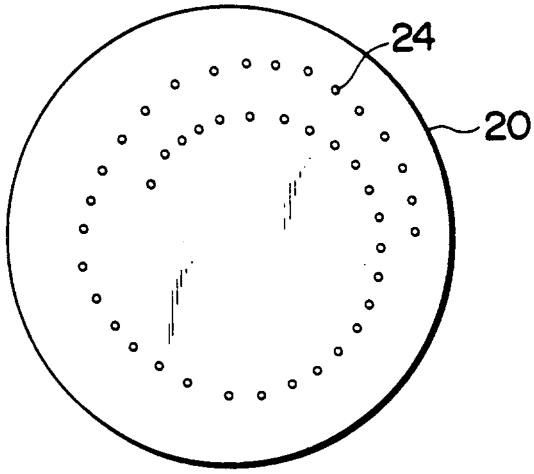

*Fig. 27*

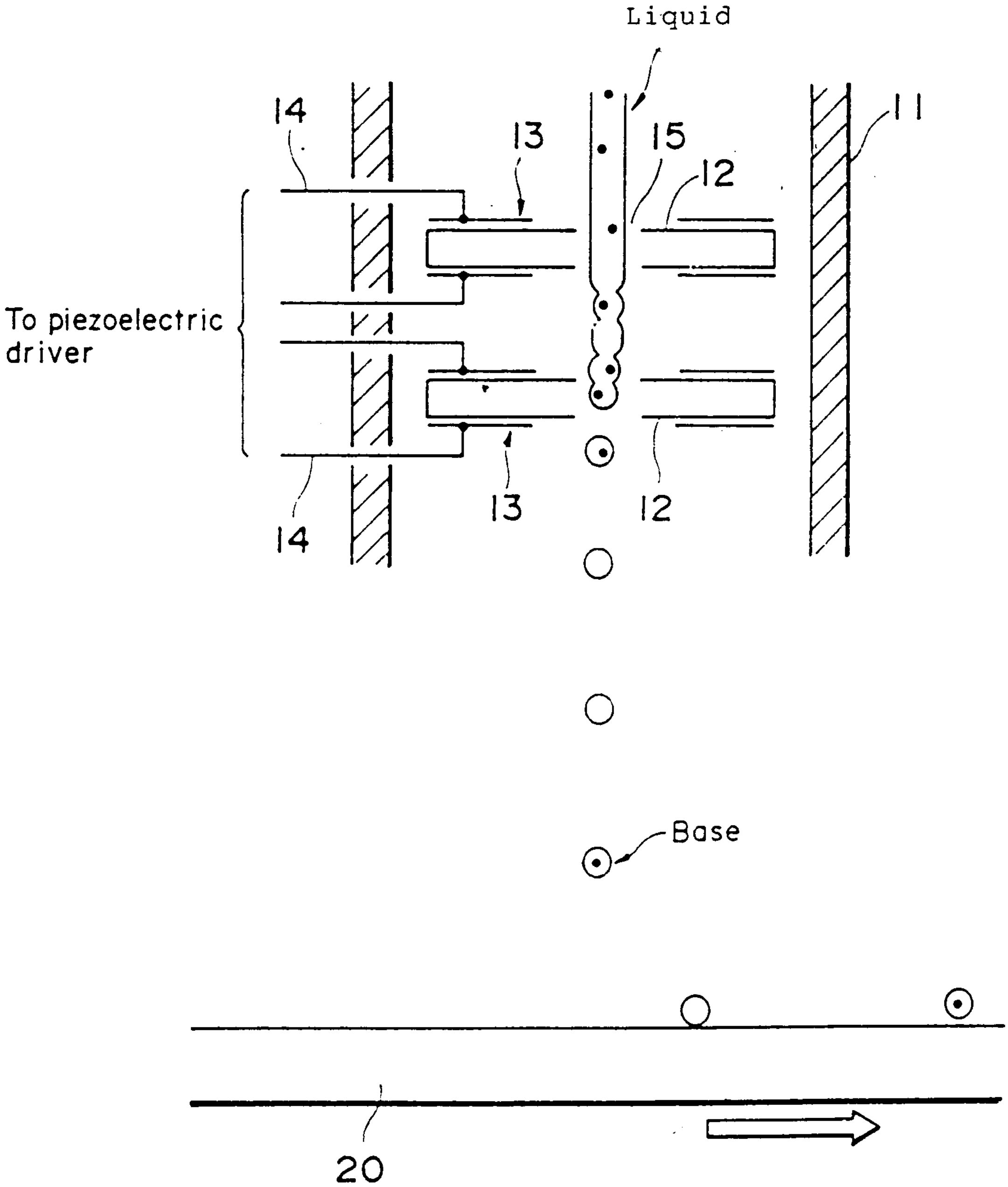

Fig. 28

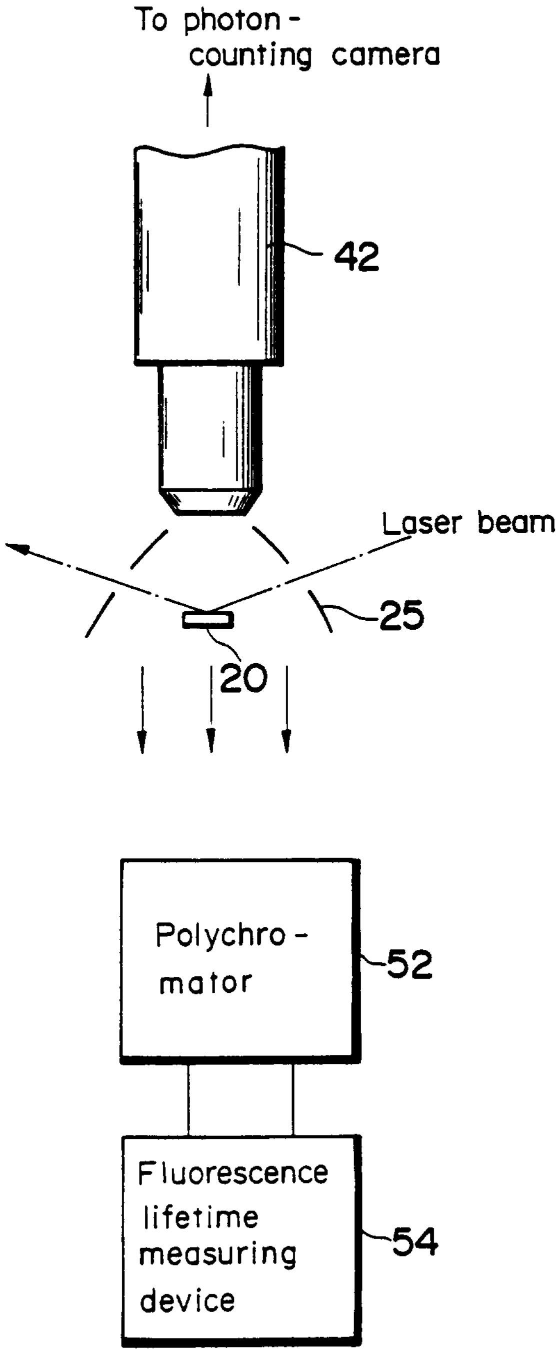
To photon-
counting camera
42
Laser beam
25
20
Polychro-
mator
52
Fluorescence
lifetime
measuring
device
54

Fig. 29

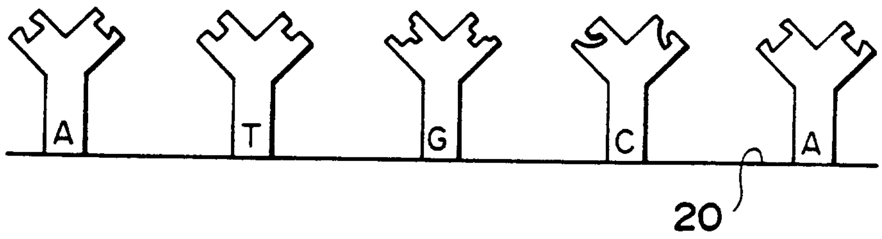


Fig. 30

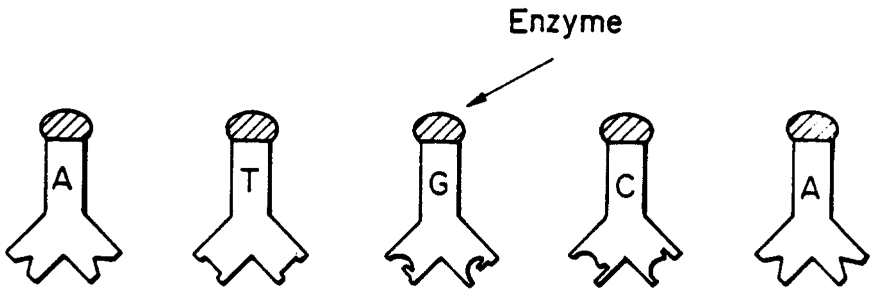


Fig. 31

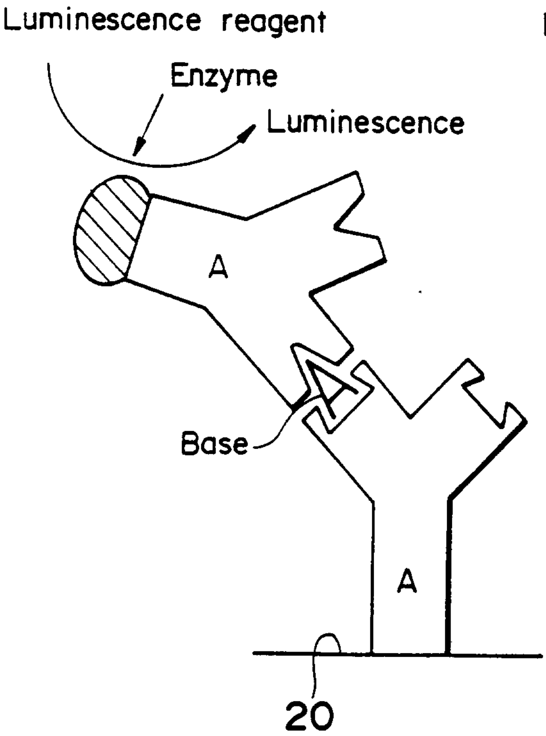


Fig. 32